# EUROPEAN PATENT APPLICATION

(11) **EP 4 845 119 A1**
(43) Date of publication of application: **25.11.2026**
(21) Application number: 25805591.2
(22) Date of filing: 31.03.2025
(51) Int. Cl.: H04L 45/748, H04L 45/7453

(54) **QUERY METHOD AND APPARATUS, AND DEVICE**

(71) Applicant: New H3C Technologies Co., Ltd., Binjiang District Hangzhou Zhejiang 310052 (CN)
(72) Inventor: The designation of the inventor has not yet been filed
(74) Representative: 2SPL Patentanwälte PartG mbB
(86) International application number: PCT/CN2025/086106
(87) International publication number: WO 2026/207656

(57) **Abstract**

A lookup method and a device are provided. The method includes: constructing a Bitcuts Hash Trie (BHT) based on a configured split bit M, wherein the BHT comprises a plurality of nodes, each node corresponds to an exact-match bit count and a data structure; determining one or more parent prefixes by splitting a to-be-stored IPv6 prefix based on the BHT and the prefix length of the to-be-stored IPv6 prefix; for each parent prefix, looking up a target node corresponding to the parent prefix from the BHT, wherein the exact-match bit count of the target node is same as the prefix length of the parent prefix; adding the parent prefix to the data structure of the target node; wherein, if the parent prefix is not the parent prefix with the longest prefix length of the to-be-stored IPv6 prefix, the parent prefix corresponds to invalid information in the data structure.

## Description

### TECHNICAL FIELD

The present disclosure relates to the field of communication technologies, and particularly to a lookup method, an apparatus, and a device.

### BACKGROUND

Forwarding Information Base (FIB) is a key data structure in network devices (such as routers or switches) and is to efficiently forward data packets. The FIB is employed to store the mapping relationship between IP addresses and outgoing interfaces. In response to receiving a data packet, a network device queries the FIB using the destination address of the data packet to obtain the corresponding outgoing interface for the destination address and then sends the data packet through that outgoing interface.

In response to determining the IP address is an IPv6 address, due to the fact that IPv6 addresses have a larger address space and longer network segments, storing IPv6 addresses in the FIB requires a significant amount of memory space. Each time an IPv6 address is added to or deleted from the FIB, the update performance of the IPv6 address is poor. In response to determining looking up an IPv6 address from the FIB, the look up performance of the IPv6 address is also poor, requiring a longer look up time.

### SUMMARY

The present disclosure provides a lookup method, the method including:
constructing a Bitcuts Hash Trie (BHT) based on a configured split bit M, wherein the BHT includes a plurality of nodes, each node corresponds to an exact-match bit count and a data structure, and the exact-match bit count of each node is an integer a plurality of M; wherein, for each node except nodes at a last level, the node corresponds to a first child node and a second child node, the exact-match bit count of the first child node is greater than the exact-match bit count of the node, and the exact-match bit count of the second child node is less than the exact-match bit count of the node;
determining one or more parent prefixes by splitting a to-be-stored IPv6 prefix based on the BHT and a prefix length of the to-be-stored IPv6 prefix, wherein the prefix length of each parent prefix is an integer a plurality of M;
for each parent prefix, looking up a target node corresponding to the parent prefix from the BHT, wherein the exact-match bit count of the target node is same as the prefix length of the parent prefix;
adding the parent prefix to the data structure of the target node; wherein, if the parent prefix is not a parent prefix with a longest prefix length of the to-be-stored IPv6 prefix, the parent prefix corresponds to invalid information in the data structure; if the parent prefix is the parent prefix with the longest prefix length of the to-be-stored IPv6 prefix, the parent prefix corresponds to valid information in the data structure, and the valid information is to determine forwarding information corresponding to the to-be-stored IPv6 prefix;
wherein the BHT is to look up forwarding information corresponding to an IPv6 address to be looked up.

The present disclosure provides a look up apparatus, said apparatus including:
a construction module, to construct a Bitcuts Hash Trie (BHT) based on a configured split bit M, wherein the BHT includes a plurality of nodes, each node corresponds to an exact-match bit count and a data structure, and the exact-match bit count of each node is an integer a plurality of M; for each node except nodes at a last level, the node corresponds to a first child node and a second child node, the exact-match bit count of the first child node is greater than the exact-match bit count of the node, and the exact-match bit count of the second child node is less than the exact-match bit count of the node;
a splitting module, to determine one or more parent prefixes by splitting a to-be-stored IPv6 prefix based on a prefix length of the to-be-stored IPv6 prefix and the BHT, wherein the prefix length of each parent prefix is an integer a plurality of M;
a processing module, to, for each parent prefix, lookup a target node corresponding to the parent prefix from the BHT, wherein the exact-match bit count of the target node is same as the prefix length of the parent prefix; add the parent prefix to the data structure of the target node; wherein if the parent prefix is not a parent prefix with a longest prefix length of the to-be-stored IPv6 prefix, the parent prefix corresponds to invalid information in the data structure; if the parent prefix is the parent prefix with the longest prefix length of the to-be-stored IPv6 prefix, the parent prefix corresponds to valid information in the data structure, and the valid information is to determine forwarding information corresponding to the to-be-stored IPv6 prefix;
wherein the BHT is to lookup forwarding information corresponding to an IPv6 address to be looked up.

The present disclosure provides a network device, wherein including: a processor and a machine-readable storage medium, wherein the machine-readable storage medium stores machine-executable instructions executable by the processor; the processor is to execute the machine-executable instructions to implement the lookup method as described in the above examples of the present disclosure.

The present disclosure provides a computer program product, wherein the computer program product including a computer program, wherein in response to determining said computer program is executed by a processor, it implements the lookup method as described in the above examples of the present disclosure.

The present disclosure provides a machine-readable storage medium, wherein said machine-readable storage medium stores machine-executable instructions that may be executed by a processor; wherein said processor is to execute said machine-executable instructions to implement the lookup method as described in the above examples of the present disclosure.

It may be seen from the above technical solutions that, in the applications of the present disclosure, a Bitcuts Hash Trie (BHT) may be constructed, IPv6 addresses may be stored through the BHT, and IPv6 addresses may be looked up through the BHT, supporting high-performance longest match of IPv6 addresses and meeting high-performance forwarding requirements, which may significantly improve the update and lookup performance of IPv6 addresses and reduce memory space consumption for IPv6 addresses.

### BRIEF DESCRIPTION OF THE DRAWINGS

FIG. 1 is a schematic diagram of the lookup method in an application of the present disclosure.
FIG. 2 is a schematic diagram of forwarding performance in an application of the present disclosure.
FIG. 3A-3D are structural diagrams of the BHT in an application of the present disclosure.
FIG. 4A is a hash-switching schematic diagram of the data structure in an application of the present disclosure.
FIG. 4B is a hash-switching schematic diagram of the data structure in an application of the present disclosure.
FIG. 4C is a hash-switching schematic diagram of the data structure in an application of the present disclosure.
FIG. 5A is a schematic diagram of the throughput effect in an application of the present disclosure.
FIG. 5B is a schematic diagram of the memory usage effect in an application of the present disclosure.
FIG. 6 is a structural diagram of the look up apparatus in an application of the present disclosure.
FIG. 7 is a hardware structure diagram of the network device in an application of the present disclosure.

### DETAILED DESCRIPTION

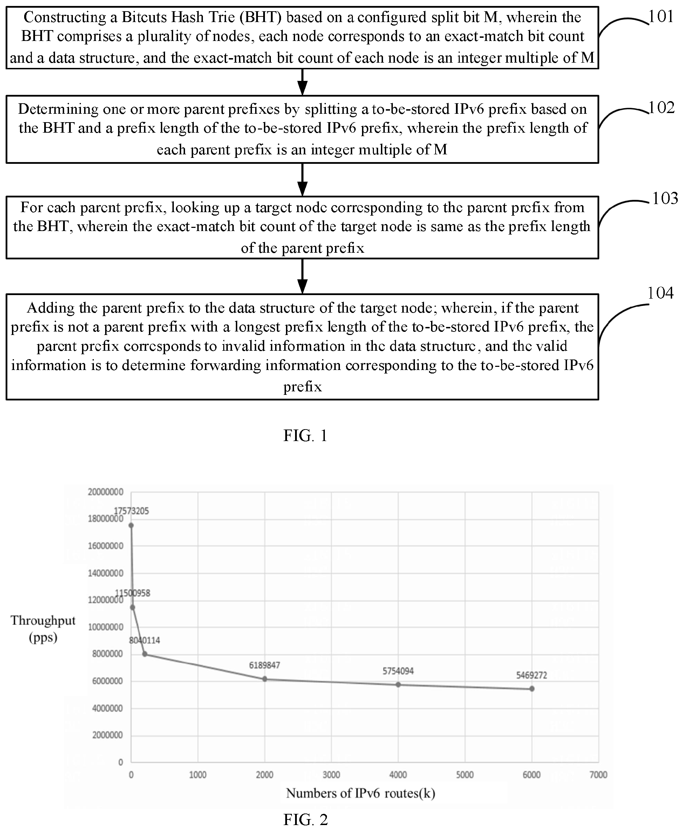

An application of the present disclosure proposes a lookup method that may be applied to network devices (such as routers or switches). As shown in FIG. 1, which is a schematic diagram of the method, the method may include:
Process 101: construct a Bitcuts Hash Trie (BHT) based on a configured split bit M, wherein the BHT includes a plurality of nodes, each node corresponds to an exact-match bit count and a data structure, and the exact-match bit count of each node is an integer a plurality of M; wherein, for each node except nodes at the last level, the node corresponds to a first child node and a second child node, the exact-match bit count of the first child node is greater than the exact-match bit count of the node, and the exact-match bit count of the second child node is less than the exact-match bit count of the node.
Process 102: determine one or more parent prefixes by splitting a to-be-stored IPv6 prefix based on the BHT and the prefix length of the to-be-stored IPv6 prefix, wherein the prefix length of each parent prefix is an integer a plurality of M to-be-stored IPv6 prefix.
Process 103: for each parent prefix, looking up a target node corresponding to the parent prefix from the BHT, wherein the exact-match bit count of the target node is the same as the prefix length of the parent prefix.
Process 104: add the parent prefix to the data structure of the target node; wherein, if the parent prefix is not the parent prefix with the longest prefix length of the to-be-stored IPv6 prefix, the parent prefix corresponds to invalid information in the data structure; if the parent prefix is the parent prefix with the longest prefix length of the to-be-stored IPv6 prefix, the parent prefix corresponds to valid information in the data structure, and the valid information is to determine forwarding information corresponding to the to-be-stored IPv6 prefix.

Wherein, the BHT is to look up forwarding information corresponding to an IPv6 address to be looked up.

As may be seen from the above technical solutions, a BHT may be constructed to store IPv6 addresses, look up IPv6 addresses, support high-performance longest matching of IPv6 addresses, meet high-performance forwarding requirements, significantly improve the update and look up performance of IPv6 addresses, and reduce the memory space occupied by IPv6 addresses.

The following describes the above technical solutions of the applications of the present disclosure in conjunction with specific application scenarios.

The FIB is a key data structure in network devices, to store the mapping relationship between IP addresses and outgoing interfaces. FIB queries use longest matching. In response to determining the IP addresses are IPv6 addresses, due to the larger address space and longer network segments of IPv6 addresses, storing IPv6 addresses in the FIB occupies a large amount of memory space. Each time an IPv6 address is added or deleted from the FIB, the update performance of IPv6 addresses is poor. In response to determining looking up IPv6 addresses from the FIB, the look up performance of IPv6 addresses is poor, requiring longer look up times. In summary, there is a need to provide a lookup method that finds an optimal solution between the update performance, look up performance, and memory occupation of the FIB, enabling the FIB to respond to network changes at a high speed in response to determining meeting high-performance forwarding requirements and occupying less memory.

For example, to find an optimal solution between update performance, look up performance, and memory occupation, Vector Packet Processing (VPP ) technology may be adopted. VPP is a high-performance packet processing framework. By processing a plurality of packets (vectors) at once, VPP fully utilizes the parallel computing capabilities of multi-core CPUs to improve processing performance. VPP may process packets at a rate close to line speed. VPP may be applied in application scenarios such as IPv6 FIBs, MAC address tables, and session tables, with no restrictions on its application.

VPP enables vectorized processing. By processing a plurality of packets (vectors) at once instead of processing packet by packet, VPP fully utilizes the parallel computing capabilities of CPUs. VPP reduces the overhead of CPU context switching and branch prediction failures. VPP improves cache hit rates and reduces memory access latency.

VPP enables a high-performance data path. By directly accessing the memory areas of packets, VPP avoids unnecessary data copying, thereby reducing CPU overhead and latency. In the high-performance data path, VPP combines the processing operations of a plurality of packets into a single batch processing task, reducing the overhead of system calls and context switching, achieving batch processing optimization. The high-performance data path design of VPP supports multi-threaded parallel processing, fully utilizing the computing capabilities of multi-core CPUs to achieve multi-core scalability.

VPP enables an efficient hash algorithm (Bounded-index Extensible Hashing, bihash). VPP uses bihash as the core hash table implementation for fast lookup and insertion operations. bihash supports efficient key-value pair storage and looking up, supports dynamic expansion of the hash table size, may adapt to data of different scales, and supports low memory occupation and high concurrency.

VPP may integrate Data Plane Development Kit (DPDK ). VPP utilizes DPDK to implement user-space network I/O, bypassing the kernel network stack and directly accessing network card hardware, thereby significantly improving packet processing performance. VPP reduces context switching between the kernel and user spaces, supports zero-copy packet transmission, provides an efficient polling mode driver, and maximizes network card performance.

However, in VPP, the bihash algorithm used for IPv6 FIB queries experiences a decrease in data packet forwarding performance in response to determining the number of IPv6 prefixes reaches the hundred-thousand level or above. As the number of IPv6 prefixes increases, the performance significantly declines, failing to meet the high-performance forwarding requirements for IPv6 prefixes at the hundred-thousand level or above.

For example, as shown in FIG. 2, which is a schematic diagram of forwarding performance. The x-axis represents the number of IPv6 routes (i.e., the number of IPv6 prefixes), and the y-axis represents throughput, which reflects the forwarding performance of data packets. Tests were conducted using data packets of 128 bytes in size to obtain throughput under different numbers of IPv6 prefixes. After 100,000 prefixes, the bihash algorithm in VPP may no longer meet the full-bandwidth throughput requirement of 20G.

In response to the above findings, this application proposes a lookup method that may support high-performance longest matching for IPv6 prefixes in the range of millions to tens of millions, with performance higher than that of algorithms such as VPP in response to determining the number of prefixes is at the hundred-thousand level or above.

For example, in the FIB look up process, a longest matching lookup method needs to be adopted. Suppose there are two IPv6 prefixes: 2001::1234:0:0:1/80 and 2001::1234:abcd:0:1/96. The destination IPv6 address of a data packet is 2001::1234:abcd:0:3, which may simultaneously match these two IPv6 prefixes. However, the IPv6 prefix with the longest prefix length is ultimately selected, i.e., 2001::1234:abcd:0:1/96.

Thus, in response to determining a destination IPv6 address matches an IPv6 prefix with a longer prefix length, the destination IPv6 address may also match an IPv6 prefix with a shorter prefix length that includes the former.

Based on the above characteristics, in this application, IPv6 prefixes may be segmented to obtain a plurality of IPv6 prefixes with shorter prefix lengths. During the look up process, in response to determining the destination IPv6 address matches an IPv6 prefix, the search continues for an IPv6 prefix with a longer prefix length. If the destination IPv6 address does not match the IPv6 prefix, the search continues for an IPv6 prefix with a shorter prefix length, thereby completing the longest matching of IPv6 prefixes.

In response to determining the prefix length of the found IPv6 prefix is below 32 bits or 16 bits, a prefix trie may be to complete the look up for the last segment and find the forwarding information for the longest prefix that matches the destination IPv6 address.

Based on the above technical concept, an application of the present disclosure proposes a lookup method that may be applied to network devices (such as routers or switches). The lookup method may involve the following processes:
First, construct a BHT Trie.

For example, a split bit M may be pre-configured, where M may be 1, 2, 4, 8, 16, 32, etc., with no restrictions on the value of M. Based on the split bit M, construct a BHT. The BHT includes a plurality of nodes, with each node corresponding to an exact-match bit count and a data structure. The exact-match bit count for each node may be an integer a plurality of M.

For each node except the nodes at the last level, the node may correspond to a first child node and a second child node. The exact-match bit count of the first child node may be greater than that of the node, and the exact-match bit count of the second child node may be less than that of the node.

For each node except nodes at the last level, the difference between the exact-match bit count of the first child node corresponding to the node and the exact-match bit count of the node is M*2 ^{(S-1)}, and the difference between the exact-match bit count of the node and the exact-match bit count of the second child node corresponding to the node is M*2 ^{(S-1)}.

Wherein, S represents the difference between the level number of the last-level nodes and the level number of the node.

For example, in response to determining M is 1, the BHT has a total of seven levels of nodes. Assuming the exact-match bit count of the first-level node in the BHT is 64, S is 6 (which is 7-1), and the difference between the exact-match bit count of the first-level node and that of the second-level node is 1*2⁽⁶⁻¹⁾, i.e., the difference is 32.

Based on this, for the first-level node, the exact-match bit count of its first child node may be 96 (which is 64+32), and the exact-match bit count of its second child node may be 32 (which is 64-32).

For the second-level node, S is 5 (which is 6-1), and the difference between the exact-match bit count of the second-level node and that of the third-level node is 1*2⁽⁵⁻¹⁾, i.e., the difference is 16.

For the second-level node with an exact-match bit count of 96, the exact-match bit count of its first child node is 112 (which is 96+16), and the exact-match bit count of its second child node is 80 (which is 96-16).

For the second-level node with an exact-match bit count of 32, the exact-match bit count of its first child node is 48 (which is 32+16), and the exact-match bit count of its second child node is 16 (which is 32-16).

For the third-level node, S is 4 (which is 5-1), and the difference between the exact-match bit count of the third-level node and that of the fourth-level node is 1*2⁽⁴⁻¹⁾, i.e., the difference is 8.

For the third-level node with an exact-match bit count of 112, the exact-match bit count of its first child node is 120 (which is 112+8), and the exact-match bit count of its second child node is 104 (which is 112-8).

For the third-level node with an exact-match bit count of 80, the exact-match bit count of its first child node is 88 (which is 80+8), and the exact-match bit count of its second child node is 72 (80-8).

For the third-level node with an exact-match bit count of 48, the exact-match bit count of its first child node is 56(which is 48+8), and the exact-match bit count of its second child node is 40 (which is 48-8).

For the third-level node with an exact-match bit count of 16, the exact-match bit count of its first child node is 24 (which is 16+8), and the exact-match bit count of its second child node is 8 (which is 16-8).

For the fourth-level node, S is 3 (which is 4-1), and the difference between the exact-match bit count of the fourth-level node and that of the fifth-level node is 1*2⁽³⁻¹⁾, i.e., the difference is 4.

For the fourth-level node with an exact-match bit count of 120, the exact-match bit count of its first child node is 124 (which is 120+4), and the exact-match bit count of its second child node is 116 (which is 120-4).

For the fourth-level node with an exact-match bit count of 104, the exact-match bit count of its first child node is 108 (which is 104+4), and the exact-match bit count of its second child node is 100 (which is 104-4).

For the fourth-level node with an exact-match bit count of 88, the exact-match bit count of its first child node is 92 (which is 88+4), and the exact-match bit count of its second child node is 84 (which is 88-4).

For the fourth-level node with an exact-match bit count of 72, the exact-match bit count of its first child node is 76 (which is 72+4), and the exact-match bit count of its second child node is 68 (which is 72-4).

For the fourth-level node with an exact-match bit count of 56, the exact-match bit count of its first child node is 60 (which is 56+4), and the exact-match bit count of its second child node is 52 (which is 56-4).

For the fourth-level node with an exact-match bit count of 40, the exact-match bit count of its first child node is 44 (which is 40+4), and the exact-match bit count of its second child node is 36 (which is 40-4).

For the fourth-level node with an exact-match bit count of 24, the exact-match bit count of its first child node is 28 (which is 24+4), and the exact-match bit count of its second child node is 20 (which is 24-4).

For the fourth-level node with an exact-match bit count of 8, the exact-match bit count of its first child node is 12 (which is 8+4), and the exact-match bit count of its second child node is 4 (which is 8-4).

For a node at the fifth level, S is 2 (which is 3-1), and the difference between the exact-match bit count of the node at the fifth level and that of the node at the sixth level is 1*2⁽²⁻¹⁾-, that is, the difference is 2.

For a node with an exact-match bit count of 124 at the fifth level, the exact-match bit count of its first child node is 126 (124+2), and the exact-match bit count of its second child node is 122 (124-2).

For a node with an exact-match bit count of 116 at the fifth level, the exact-match bit count of its first child node is 118 (116+2), and the exact-match bit count of its second child node is 114 (116-2).

For a node with an exact-match bit count of 108 at the fifth level, the exact-match bit count of its first child node is 110 (108+2), and the exact-match bit count of its second child node is 106 (108-2).

For a node with an exact-match bit count of 100 at the fifth level, the exact-match bit count of its first child node is 102 (100+2), and the exact-match bit count of its second child node is 98 (100-2).

For a node with an exact-match bit count of 92 at the fifth level, the exact-match bit count of its first child node is 94 (92+2), and the exact-match bit count of its second child node is 90 (92-2).

For a node with an exact-match bit count of 84 at the fifth level, the exact-match bit count of its first child node is 86 (84+2), and the exact-match bit count of its second child node is 82 (84-2).

For a node with an exact-match bit count of 76 at the fifth level, the exact-match bit count of its first child node is 78 (76+2), and the exact-match bit count of its second child node is 74 (76-2).

For a node with an exact-match bit count of 68 at the fifth level, the exact-match bit count of its first child node is 70 (68+2), and the exact-match bit count of its second child node is 66 (68-2).

For a node with an exact-match bit count of 60 at the fifth level, the exact-match bit count of its first child node is 62 (60+2), and the exact-match bit count of its second child node is 58 (60-2).

For a node with an exact-match bit count of 52 at the fifth level, the exact-match bit count of its first child node is 54 (52+2), and the exact-match bit count of its second child node is 50 (52-2).

For a node with an exact-match bit count of 44 at the fifth level, the exact-match bit count of its first child node is 46 (44+2), and the exact-match bit count of its second child node is 42 (44-2).

For a node with an exact-match bit count of 36 at the fifth level, the exact-match bit count of its first child node is 38 (36+2), and the exact-match bit count of its second child node is 34 (36-2).

For a node with an exact-match bit count of 28 at the fifth level, the exact-match bit count of its first child node is 30 (28+2), and the exact-match bit count of its second child node is 26 (28-2).

For a node with an exact-match bit count of 20 at the fifth level, the exact-match bit count of its first child node is 22 (20+2), and the exact-match bit count of its second child node is 18 (20-2).

For a node with an exact-match bit count of 12 at the fifth level, the exact-match bit count of its first child node is 14 (12+2), and the exact-match bit count of its second child node is 10 (12-2).

For a node with an exact-match bit count of 4 at the fifth level, the exact-match bit count of its first child node is 6 (4+2), and the exact-match bit count of its second child node is 2 (4-2).

For a node at the sixth level, S is 1 (2-1), and the difference between the exact-match bit count of the node at the sixth level and that of the node at the seventh level (the last level) is 1*2⁽¹⁻¹⁾, that is, the difference is 1.

For a node with an exact-match bit count of 126 at the sixth level, the exact-match bit count of its first child node is 127 (126+1), and the exact-match bit count of its second child node is 125 (126-1).

For a node with an exact-match bit count of 122 at the sixth level, the exact-match bit count of its first child node is 123 (122+1), and the exact-match bit count of its second child node is 121 (122-1).

For a node with an exact-match bit count of 118 at the sixth level, the exact-match bit count of its first child node is 119 (118+1), and the exact-match bit count of its second child node is 117 (118-1).

For a node with an exact-match bit count of 114 at the sixth level, the exact-match bit count of its first child node is 115 (114+1), and the exact-match bit count of its second child node is 113 (114-1).

For a node with an exact-match bit count of 110 at the sixth level, the exact-match bit count of its first child node is 111 (110+1), and the exact-match bit count of its second child node is 109 (110-1).

For a node with an exact-match bit count of 106 at the sixth level, the exact-match bit count of its first child node is 107 (106+1), and the exact-match bit count of its second child node is 105 (106-1).

For a node with an exact-match bit count of 102 at the sixth level, the exact-match bit count of its first child node is 103 (102+1), and the exact-match bit count of its second child node is 101 (102-1).

For a node with an exact-match bit count of 98 at the sixth level, the exact-match bit count of its first child node is 99 (98+1), and the exact-match bit count of its second child node is 97 (98-1).

For a node with an exact-match bit count of 94 at the sixth level, the exact-match bit count of its first child node is 95 (94+1), and the exact-match bit count of its second child node is 93 (94-1).

For a node with an exact-match bit count of 90 at the sixth level, the exact-match bit count of its first child node is 91 (90+1), and the exact-match bit count of its second child node is 89 (90-1).

For a node with an exact-match bit count of 86 at the sixth level, the exact-match bit count of its first child node is 87 (86+1), and the exact-match bit count of its second child node is 85 (86-1).

For a node with an exact-match bit count of 82 at the sixth level, the exact-match bit count of its first child node is 83 (82+1), and the exact-match bit count of its second child node is 81 (82-1).

For a node with an exact-match bit count of 78 at the sixth level, the exact-match bit count of its first child node is 79 (78+1), and the exact-match bit count of its second child node is 77 (78-1).

For a node with an exact-match bit count of 74 at the sixth level, the exact-match bit count of its first child node is 75 (74+1), and the exact-match bit count of its second child node is 73 (74-1).

For a node with an exact-match bit count of 70 at the sixth level, the exact-match bit count of its first child node is 71 (70+1), and the exact-match bit count of its second child node is 69 (70-1).

For a node with an exact-match bit count of 66 at the sixth level, the exact-match bit count of its first child node is 67 (66+1), and the exact-match bit count of its second child node is 35 (66-1).

For a node with an exact-match bit count of 62 at the sixth level, the exact-match bit count of its first child node is 63 (62+1), and the exact-match bit count of its second child node is 61 (62-1).

For a node with an exact-match bit count of 58 at the sixth level, the exact-match bit count of its first child node is 59 (58+1), and the exact-match bit count of its second child node is 57 (58-1).

For a node with an exact-match bit count of 54 at the sixth level, the exact-match bit count of its first child node is 55 (54+1), and the exact-match bit count of its second child node is 53 (54-1).

For a node with an exact-match bit count of 50 at the sixth level, the exact-match bit count of its first child node is 51 (50+1), and the exact-match bit count of its second child node is 49 (50-1).

For a node with an exact-match bit count of 46 at the sixth level, the exact-match bit count of its first child node is 47 (46+1), and the exact-match bit count of its second child node is 45 (46-1).

For a node with an exact-match bit count of 42 at the sixth level, the exact-match bit count of its first child node is 43 (42+1), and the exact-match bit count of its second child node is 41 (42-1).

For a node with an exact-match bit count of 38 at the sixth level, the exact-match bit count of its first child node is 39 (38+1), and the exact-match bit count of its second child node is 37 (38-1).

For a node with an exact-match bit count of 34 at the sixth level, the exact-match bit count of its first child node is 35 (34+1), and the exact-match bit count of its second child node is 33 (34-1).

For a node with an exact-match bit count of 30 at the sixth level, the exact-match bit count of its first child node is 31 (30+1), and the exact-match bit count of its second child node is 29 (30-1).

For a node with an exact-match bit count of 26 at the sixth level, the exact-match bit count of its first child node is 27 (26+1), and the exact-match bit count of its second child node is 25 (26-1).

For a node with an exact-match bit count of 22 at the sixth level, the exact-match bit count of its first child node is 23 (22+1), and the exact-match bit count of its second child node is 21 (22-1).

For a node with an exact-match bit count of 18 at the sixth level, the exact-match bit count of its first child node is 19 (18+1), and the exact-match bit count of its second child node is 17 (18-1).

For a node with an exact-match bit count of 14 at the sixth level, the exact-match bit count of its first child node is 15 (14+1), and the exact-match bit count of its second child node is 13 (14-1).

For a node with an exact-match bit count of 10 at the sixth level, the exact-match bit count of its first child node is 11 (10+1), and the exact-match bit count of its second child node is 9 (10-1).

For a node with an exact-match bit count of 6 at the sixth level, the exact-match bit count of its first child node is 7 (6+1), and the exact-match bit count of its second child node is 5 (6-1).

For a node with an exact-match bit count of 2 at the sixth level, the exact-match bit count of its first child node is 3 (2+1), and the exact-match bit count of its second child node is 1 (2-1).

In an example, if M is 2, then there are six levels of nodes in the BHT in total. Assuming that the exact-match bit count of the node at the first level of the BHT is 64, then S is 5 (6-1), and the difference between the exact-match bit count of the node at the first level and that of the node at the second level is 2*2⁽⁵⁻¹⁾, that is, the difference is 32.

Based on this, for a node at the first level, the exact-match bit count of its first child node may be 96 (64+32), and the exact-match bit count of its second child node may be 32 (64-32).

For a node at the second level, S is 4 (5-1), and the difference between the exact-match bit count of the node at the second level and that of the node at the third level is 2*2⁽⁴⁻¹⁾, that is, the difference is 16. Based on this, in response to determining the exact-match bit counts of the nodes at the second level are 96 and 32, the exact-match bit counts of the nodes at the third level are 112, 80, 48, and 16.

For a node at the third level, S is 3 (4-1), and the difference between the exact-match bit count of the node at the third level and that of the node at the fourth level is 2*2⁽³⁻¹⁾. In response to determining the exact-match bit counts of the nodes at the third level are 112, 80, 48, and 16, the exact-match bit counts of the nodes at the fourth level may be 120, 104, 88, 72, 56, 40, 24, and 8.

For a node at the fourth level, S is 2 (3-1), and the difference between the exact-match bit count of the node at the fourth level and that of the node at the fifth level is 2*2⁽²⁻¹⁾, that is, the difference is 4. In response to determining the exact-match bit counts of the nodes at the fourth level are 120, 104, 88, 72, 56, 40, 24, and 8, the exact-match bit counts of the nodes at the fifth level are 124, 116, 108, 100, 92, 84, 76, 68, 60, 52, 44, 36, 28, 20, 12, and 4.

For a node at the fifth level, S is 1 (2-1), and the difference between the exact-match bit count of the node at the fifth level and that of the node at the sixth level is 2*2⁽¹⁻¹⁾, that is, the difference is 2. Based on this, the exact-match bit counts of the nodes at the fifth level may be 124, 116, 108, 100, 92, 84, 76, 68, 60, 52, 44, 36, 28, 20, 12, and 4, and the exact-match bit counts of the nodes at the sixth level (i.e., the last level nodes) may be 126, 122, 118, 114, 110, 106, 102, 98, 94, 90, 86, 82, 78, 74, 70, 66, 62, 58, 54, 50, 46, 42, 38, 34, 30, 26, 22, 18, 14, 10, 6, and 2.

In an example, if M is 4, then there are five levels of nodes in the BHT in total. Assuming that the exact-match bit count of the node at the first level of the BHT is 64, then S is 4 (5-1), and the difference between the exact-match bit count of the node at the first level and that of the node at the second level is 4*2⁽⁴⁻¹⁾, that is, the difference is 32.

Based on this, for a node at the first level, the exact-matching bit count of the first child node of this node may be 96 (64+32), and the exact-matching bit count of the second child node of this node may be 32 (64-32).

For a node at the second level, S is 3 (4-1), and the difference between the exact-matching bit count of the node at the second level and the exact-matching bit count of the node at the third level is 4*2⁽³⁻¹⁾, that is, the difference is 16. Based on this, the exact-matching bit counts of the nodes at the second level are 96 and 32, and the exact-matching bit counts of the nodes at the third level are 112, 80, 48, and 16.

For a node at the third level, S is 2 (3-1), and the difference between the exact-matching bit count of the node at the third level and the exact-matching bit count of the node at the fourth level is 4*2⁽²⁻¹⁾. The exact-matching bit counts of the nodes at the third level are 112, 80, 48, and 16, and the exact-matching bit counts of the nodes at the fourth level may be 120, 104, 88, 72, 56, 40, 24, and 8.

For a node at the fourth level, S is 1 (2-1), and the difference between the exact-matching bit count of the node at the fourth level and the exact-matching bit count of the node at the fifth level is 4*2⁽¹⁻¹⁾, that is, the difference is 4. The exact-matching bit counts of the nodes at the fourth level are 120, 104, 88, 72, 56, 40, 24, and 8, and the exact-matching bit counts of the nodes at the fifth level are 124, 116, 108, 100, 92, 84, 76, 68, 60, 52, 44, 36, 28, 20, 12, and 4.

Regarding the cases where M is 2 or 4, their implementations are similar to that in response to determining M is 1, and will not be elaborated on further here.

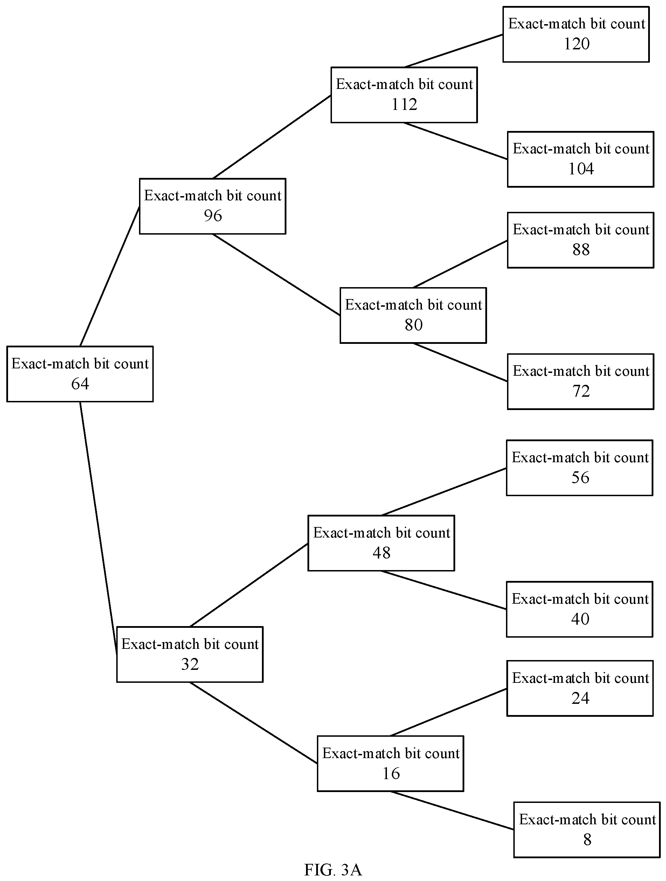

In one example, if M is 8, there are four levels of nodes in the BHT in total. Refer to Fig. 3A, which is a schematic diagram of the structure of the BHT. The BHT in Fig. 3A takes M = 8 as an example, that is, there are four levels of nodes in total.

Assume that the exact-matching bit count of the nodes at the first level of the BHT is 64, then S is 3 (4-1), and the difference between the exact-matching bit count of the nodes at the first level and the exact-matching bit count of the nodes at the second level is 8*2⁽³⁻¹⁾, that is, the difference is 32. For a node at the first level, the exact-matching bit count of the first child node of this node may be 96 (64+32), and the exact-matching bit count of the second child node of this node may be 32 (64-32).

For a node at the second level, S is 2, and the difference between the exact-matching bit count of the nodes at the second level and the exact-matching bit count of the nodes at the third level is 8*2⁽²⁻¹⁾, that is, the difference is 16. For a node at the second level with an exact-matching bit count of 96, the exact-matching bit count of the first child node of this node is 112, and the exact-matching bit count of the second child node of this node is 80; for a node at the second level with an exact-matching bit count of 32, the exact-matching bit count of the first child node of this node is 48, and the exact-matching bit count of the second child node of this node is 16.

For a node at the third level, S is 1, and the difference between the exact-matching bit count of the nodes at the third level and the exact-matching bit count of the nodes at the fourth level (i.e., the last level of nodes) is 8*2⁽¹⁻¹⁾, that is, the difference is 8.

For a node at the third level with an exact-matching bit count of 112, the exact-matching bit count of the first child node of this node is 120, and the exact-matching bit count of the second child node of this node is 104; for a node at the third level with an exact-matching bit count of 80, the exact-matching bit count of the first child node of this node is 88, and the exact-matching bit count of the second child node of this node is 72; for a node at the third level with an exact-matching bit count of 48, the exact-matching bit count of the first child node of this node is 56, and the exact-matching bit count of the second child node of this node is 40; for a node at the third level with an exact-matching bit count of 16, the exact-matching bit count of the first child node of this node is 24, and the exact-matching bit count of the second child node of this node is 8.

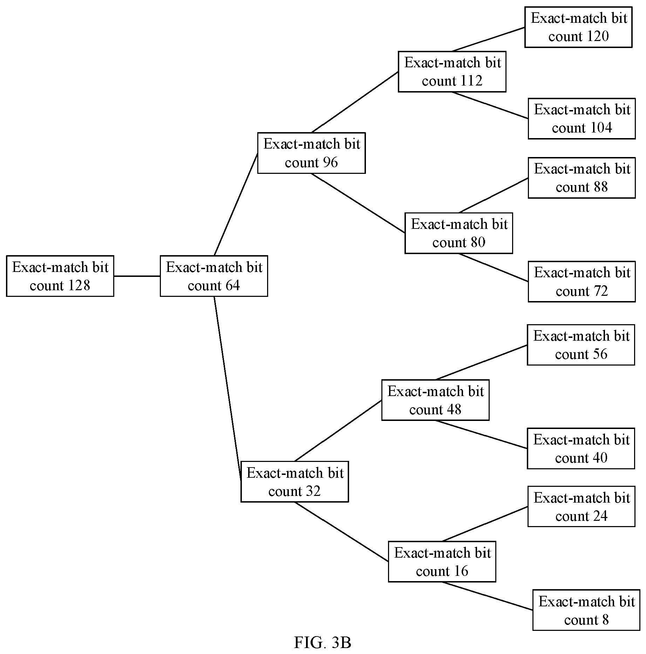

In one example, if M is 8, a root node may also be included in front of the nodes at the first level. The root node is a node with an exact-matching bit count of 128. Refer to Fig. 3B, which is a schematic diagram of the structure of the BHT.

During the storage process of IPv6 prefixes, if the prefix length of an IPv6 prefix is 128 bits, the IPv6 prefix and its forwarding information are stored in the root node, and the splitting process of the IPv6 prefix is not performed. If the prefix length of the IPv6 prefix is not 128 bits, the IPv6 prefix is not stored in the root node, and the splitting process of the IPv6 prefix is performed. The splitting process of the IPv6 prefix may refer to subsequent applications.

During the look up process of IPv6 addresses, if an IPv6 address successfully matches the 128-bit IPv6 prefix of the root node, the forwarding information of the IPv6 address is directly obtained from the root node, and subsequent nodes are not looked up.

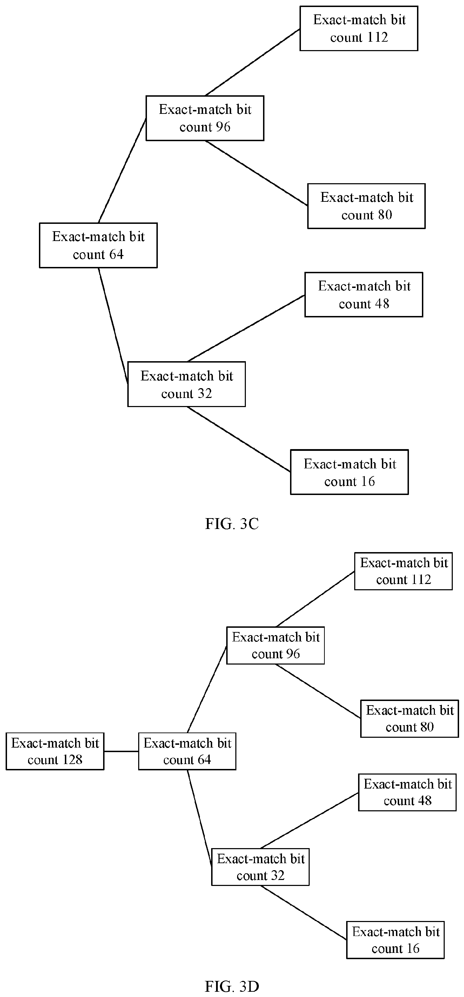

In one example, if M is 16, there are three levels of nodes in the BHT in total. Refer to Fig. 3C, which is a schematic diagram of the structure of the BHT. The BHT in Fig. 3C takes M = 16 as an example, that is, there are three levels of nodes in total.

Assume that the exact-matching bit count of the nodes at the first level of the BHT is 64, then S is 2 (3-1), and the difference between the exact-matching bit count of the nodes at the first level and the exact-matching bit count of the nodes at the second level is 16*2⁽²⁻¹⁾, that is, the difference is 32. For a node at the first level, the exact-matching bit count of the first child node of this node may be 96 (64+32), and the exact-matching bit count of the second child node of this node may be 32 (64-32).

For a node at the second level, S is 1, and the difference between the exact-matching bit count of the nodes at the second level and the exact-matching bit count of the nodes at the third level is 16*2⁽¹⁻¹⁾, that is, the difference is 16. For a node at the second level with an exact-matching bit count of 96, the exact-matching bit count of the first child node of this node is 112, and the exact-matching bit count of the second child node of this node is 80; for a node at the second level with an exact-matching bit count of 32, the exact-matching bit count of the first child node of this node is 48, and the exact-matching bit count of the second child node of this node is 16.

In one example, if M is 16, a root node may also be included in front of the nodes at the first level. The root node is a node with an exact-matching bit count of 128. Refer to Fig. 3D, which is a schematic diagram of the structure of the BHT. During the storage process of IPv6 prefixes, if the prefix length of an IPv6 prefix is 128 bits, the IPv6 prefix and its forwarding information are stored in the root node. If the prefix length of the IPv6 prefix is not 128 bits, the splitting process of the IPv6 prefix is performed. During the look up process of IPv6 addresses, if an IPv6 address successfully matches the 128-bit IPv6 prefix of the root node, the forwarding information of the IPv6 address is directly obtained from the root node.

In one example, if M is 32, there are two levels of nodes in the BHT in total. Assume that the exact-matching bit count of the nodes at the first level of the BHT is 64, then S is 1 (2-1), and the difference between the exact-matching bit count of the nodes at the first level and the exact-matching bit count of the nodes at the second level (i.e., the last level of nodes) is 32*2⁽¹⁻¹⁾, that is, the difference is 32. For a node at the first level, the exact-matching bit count of the first child node of this node may be 96 (64+32), and the exact-matching bit count of the second child node of this node may be 32 (64-32).

In the above process, taking the exact-matching bit count of the nodes at the first level as 64 as an example. In addition to 64, other values may also be used as the exact-matching bit count of the nodes at the first level, and there is no restriction on this. In response to determining 64 is used as the exact-matching bit count of the nodes at the first level, except for the root node with an exact-matching bit count of 128 bits, the remaining nodes form a completely balanced binary trie. In response to determining other values are used as the exact-matching bit count of the nodes at the first level, the remaining nodes do not form a completely balanced binary trie, but this does not affect the implementation of the present scheme.

Second, the splitting process of IPv6 prefixes to be stored based on the BHT.

In one example, for each to-be-stored IPv6 prefix, based on the prefix length of the to-be-stored IPv6 prefix and the BHT, the to-be-stored IPv6 prefix is split into one or more parent prefixes, and the prefix length of each parent prefix is an integer a plurality of M. For each parent prefix, the target node corresponding to the parent prefix is looked up from the BHT, and the exact-matching bit count of the target node is the same as the prefix length of the parent prefix. The parent prefix is added to the data structure of the target node. The splitting process of the to-be-stored IPv6 prefix is described below in combination with the following processes.

Process S11: Determine the nodes at the first level of the BHT as the current nodes.

Process S12: Compare the prefix length of the to-be-stored IPv6 prefix with the exact-matching bit count of the current node. If the prefix length of the to-be-stored IPv6 prefix is greater than the exact-matching bit count of the current node, perform Process S13. If the prefix length of the to-be-stored IPv6 prefix is less than the exact-matching bit count of the current node, perform Process S14. If the prefix length of the to-be-stored IPv6 prefix is equal to the exact-matching bit count of the current node, perform Process S15.

Process S13: Split off a parent prefix from the to-be-stored IPv6 prefix, and the prefix length of the parent prefix is the exact-matching bit count of the current node. For example, assume that the exact-matching bit count of the current node is 64, then the first 64 bits of the to-be-stored IPv6 prefix are split out to obtain a parent prefix with a prefix length of 64 bits. After splitting out the parent prefix, determine the first child node of the current node as the updated current node, and perform Process S16.

Process S14: determine the second child node of the current node as the updated current node, and perform Process S16. In Process S14, it is not necessary to split off a parent prefix from the to-be-stored IPv6 prefix.

Process S15: determine the second child node of the current node as the updated current node, and perform Process S16. In Process S15, it is not necessary to split off a parent prefix from the to-be-stored IPv6 prefix.

Process S16: based on the updated current node in Processes S13-S15, determine whether the current node is the last level of node. If not, return to Process S12 and repeatedly perform the operation of comparing the prefix length of the to-be-stored IPv6 prefix with the exact-matching bit count of the current node. If yes, perform Process S17.

Process S17: compare the prefix length of the to-be-stored IPv6 prefix with the exact-matching bit count of the current node. If the prefix length of the to-be-stored IPv6 prefix is greater than the exact-matching bit count of the current node, perform Process S18. If the prefix length of the to-be-stored IPv6 prefix is less than the exact-matching bit count of the current node, perform Process S19. If the prefix length of the to-be-stored IPv6 prefix is equal to the exact-matching bit count of the current node, perform Process S20.

Process S18: split off a parent prefix from the to-be-stored IPv6 prefix and stop updating the current node. The prefix length of the parent prefix is the exact-matching bit count of the current node.

In one example, in response to a certain node serves as the current node, if the prefix length of the to-be-stored IPv6 prefix is greater than the exact-matching bit count of the current node, the difference between the prefix length of the to-be-stored IPv6 prefix and the exact-matching bit count of the current node may also be calculated. If the difference between the prefix length of the to-be-stored IPv6 prefix and the exact-matching bit count of the current node is not greater than M, a tail prefix is split off from the to-be-stored IPv6 prefix, and the prefix length of the tail prefix is the difference between the prefix length of the to-be-stored IPv6 prefix and the exact-matching bit count of the current node. For example, in Process S13, if the difference between the prefix length of the to-be-stored IPv6 prefix and the exact-matching bit count of the current node is not greater than M, a parent prefix and a tail prefix are split off from the to-be-stored IPv6 prefix. For example, in Process S18, if the difference between the prefix length of the to-be-stored IPv6 prefix and the exact-matching bit count of the current node is not greater than M, a parent prefix and a tail prefix are split off from the to-be-stored IPv6 prefix.

For example, assume that the exact-matching bit count of the current node is 104, the prefix length of the to-be-stored IPv6 prefix is 108, and M is 8, then the first 104 bits of the to-be-stored IPv6 prefix are split out to obtain a parent prefix with a prefix length of 104 bits. The remaining 4 bits (the difference between the prefix length of the to-be-stored IPv6 prefix and the exact-matching bit count) of the to-be-stored IPv6 prefix are used as the tail prefix, that is, bits 105-108 are used as the tail prefix.

After splitting off a parent prefix and a tail prefix from the to-be-stored IPv6 prefix, for the parent prefix, the target node corresponding to the parent prefix may be looked up from the BHT. For example, if the exact-matching bit count of the target node is 104, the parent prefix is added to the data structure of the target node. Considering that after splitting off a parent prefix and a tail prefix from the to-be-stored IPv6 prefix, the current node is not updated, so this parent prefix is the parent prefix with the longest prefix length of the to-be-stored IPv6 prefix, and the valid information corresponding to this parent prefix in the data structure.

After splitting off a parent prefix and a tail prefix from the to-be-stored IPv6 prefix, for the tail prefix, the tail prefix and the forwarding information of the to-be-stored IPv6 prefix may also be stored in the prefix trie corresponding to the parent prefix (i.e., the parent prefix with the longest prefix length). For example, if the prefix length of the tail prefix is 4 bits (bits 105-108 of the to-be-stored IPv6 prefix), the tail prefix and the forwarding information of the to-be-stored IPv6 prefix may be stored in the prefix trie. In this way, the valid information corresponding to this parent prefix in the data structure is index information, and the index information is to indicate a specified position in the prefix trie to obtain the forwarding information based on the specified position.

In this way, in response to determining the valid information corresponding to this parent prefix in the data structure is looked up through an IPv6 address to be looked up, the specified position in the prefix trie (i.e., the prefix trie corresponding to this parent prefix) may be found through the index information, and then the tail prefix and the forwarding information of the to-be-stored IPv6 prefix may be found by looking up the prefix trie.

For a parent prefix that does not have the longest prefix length, it is not necessary to build a prefix trie for this parent prefix, that is, it is not necessary to store the forwarding information of the tail prefix and the to-be-stored IPv6 prefix. For a parent prefix that does not have the longest prefix length, the information corresponding to this parent prefix in the data structure is invalid information, that is, it is only necessary to store the parent prefix and the invalid information.

For the parent prefix with the longest prefix length, first determine whether the prefix trie corresponding to this parent prefix has been built. If yes, the forwarding information of the tail prefix and the to-be-stored IPv6 prefix is directly stored in this prefix trie. If not, the prefix trie corresponding to this parent prefix is built, and the forwarding information of the tail prefix and the to-be-stored IPv6 prefix is stored in this prefix trie. Obviously, for the same parent prefix, this parent prefix only corresponds to one prefix trie.

Process S19: stop updating the current node, that is, complete the splitting process of the to-be-stored IPv6 prefix.

Process S20: split off a parent prefix and a tail prefix from the to-be-stored IPv6 prefix, and stop updating the current node, that is, complete the splitting process of the to-be-stored IPv6 prefix. For example, the prefix length of the parent prefix may be the difference between the exact-matching bit count of the current node and M, and the prefix length of the tail prefix may be M.

For example, assume that the exact-matching bit count of the current node is 64, the prefix length of the to-be-stored IPv6 prefix is 64, and M is 8. In process S15, the second child node (with an exact-matching bit count of 32) of the current node is taken as the current node. In process S13, a parent prefix with a prefix length of 32 bits is split off from the to-be-stored IPv6 prefix. Then, the first child node (with an exact-matching bit count of 48) of the current node is taken as the current node. In process S13, a parent prefix with a prefix length of 48 bits is split off from the to-be-stored IPv6 prefix. Then, the first child node (with an exact-matching bit count of 56) of the current node is taken as the current node.

Since the current node is the last-level node and the prefix length 64 of the to-be-stored IPv6 prefix is greater than the exact-matching bit count 56 of the current node, process S18 is executed. A parent prefix and a tail prefix may be split off from the to-be-stored IPv6 prefix. The first 56 bits (the difference between the exact-matching bit count and M) of the to-be-stored IPv6 prefix are split to obtain a parent prefix with a prefix length of 56 bits. Then, the remaining 8 bits of the to-be-stored IPv6 prefix are taken as the tail prefix, that is, bits 57-64 of the to-be-stored IPv6 prefix are taken as the tail prefix.

After splitting off the parent prefix and the tail prefix from the to-be-stored IPv6 prefix, for the parent prefix, a target node corresponding to the parent prefix may be looked up from the BHT. For example, if the exact-matching bit count of the target node is 56, the parent prefix is added to the data structure of the target node. Considering that after splitting off the parent prefix and the tail prefix from the to-be-stored IPv6 prefix, updating of the current node is stopped, the parent prefix is the parent prefix with the longest prefix length of the to-be-stored IPv6 prefix, and the parent prefix corresponds to valid information in the data structure.

After splitting off the parent prefix and the tail prefix from the to-be-stored IPv6 prefix, for the tail prefix, the forwarding information (such as an outgoing interface, a next hop, etc., with no restriction on this forwarding information) of the tail prefix and the to-be-stored IPv6 prefix may also be stored in a prefix trie corresponding to the parent prefix.

For example, determining whether a prefix trie corresponding to the parent prefix has been constructed. If yes, the forwarding information of the tail prefix and the to-be-stored IPv6 prefix is directly stored in the prefix trie. If no, the prefix trie corresponding to the parent prefix is constructed, and the forwarding information of the tail prefix and the to-be-stored IPv6 prefix is stored in the prefix trie.

The prefix trie may also be referred to as a Trie. The prefix trie may be a prefix trie of types such as an M Trie or a Pop Trie. The M Trie is a data structure used for IPv4 FIB look up in VPP. The prefix trie has excellent look up performance and may well support the optimization of the Pipeline of a CPU, that is, support the optimization of CPU pipeline technology.

Based on the prefix trie corresponding to the parent prefix, the prefix length of the tail prefix is 8 bits (bits 57-64 of the to-be-stored IPv6 prefix), and the forwarding information of the tail prefix and the to-be-stored IPv6 prefix may be stored in the prefix trie. In this way, the valid information corresponding to the parent prefix in the data structure is index information, and the index information is to indicate a specified position of the prefix trie to acquire the forwarding information based on the specified position (that is, first find the prefix trie based on the specified position, and then find the forwarding information through the tail prefix). There is no restriction on the content of the index information as long as the prefix trie corresponding to the parent prefix may be found based on the index information.

In this way, in response to determining valid information corresponding to the parent prefix in the data structure is looked up through an IPv6 address to be looked up, the prefix trie corresponding to the parent prefix may be found through the index information, and then the forwarding information of the tail prefix and the to-be-stored IPv6 prefix is found from the prefix trie.

In an example, for each parent prefix, if the parent prefix is not the parent prefix with the longest prefix length of the to-be-stored IPv6 prefix, the parent prefix corresponds to invalid information (such as NULL) in the data structure, that is, the parent prefix does not correspond to a prefix trie, and there is no need to record the index information of the prefix trie. If the parent prefix is the parent prefix with the longest prefix length of the to-be-stored IPv6 prefix, the parent prefix corresponds to valid information in the data structure, and the valid information is to determine the forwarding information corresponding to the to-be-stored IPv6 prefix. For example, it is necessary to store the forwarding information corresponding to the to-be-stored IPv6 prefix in the prefix trie corresponding to the parent prefix, and the valid information is to indicate the specified position of the prefix trie corresponding to the parent prefix to look up the forwarding information corresponding to the to-be-stored IPv6 prefix through the prefix trie.

The splitting process of the to-be-stored IPv6 prefix is described below in conjunction with FIG. 3A.

Assume that the prefix length of the to-be-stored IPv6 prefix is 124. In response to determining the exact-matching bit count of the current node is 64, in process S13, parent prefix 1 is split off from the to-be-stored IPv6 prefix, and the prefix length of parent prefix 1 is 64. In process S16, the updated current node is not the last-level node, and the process returns to process S12.

In process S13, parent prefix 2 is split off from the to-be-stored IPv6 prefix, and the prefix length of parent prefix 2 is 96. In process S16, the updated current node is not the last-level node, and the process returns to process S12.

In process S13, parent prefix 3 is split off from the to-be-stored IPv6 prefix, and the prefix length of parent prefix 3 is 112. In process S16, the updated current node is the last-level node, and process S17 is executed.

In process S18, parent prefix 4 and tail prefix 5 are split off from the to-be-stored IPv6 prefix, the prefix length of parent prefix 4 is 120, and the prefix length of tail prefix 5 is 4, that is, bits 121-124 are taken as the tail prefix.

For example, if parent prefix 1 is not the parent prefix with the longest prefix length of the to-be-stored IPv6 prefix, parent prefix 1 corresponds to invalid information (such as NULL) in the data structure. If parent prefix 2 is not the parent prefix with the longest prefix length of the to-be-stored IPv6 prefix, parent prefix 2 corresponds to invalid information (such as NULL) in the data structure. If parent prefix 3 is not the parent prefix with the longest prefix length of the to-be-stored IPv6 prefix, parent prefix 3 corresponds to invalid information (such as NULL) in the data structure. If parent prefix 4 is the parent prefix with the longest prefix length of the to-be-stored IPv6 prefix, parent prefix 4 corresponds to valid information, such as index information, in the data structure.

For example, the forwarding information of tail prefix 5 and the to-be-stored IPv6 prefix may be stored in the prefix trie corresponding to parent prefix 4, and the index information corresponding to parent prefix 4 in the data structure is to indicate the specified position of the prefix trie, that is, the specified position of the prefix trie may be found through the index information, and then the forwarding information is acquired.

Assume that the prefix length of the to-be-stored IPv6 prefix is 112. In response to determining the exact-matching bit count of the current node is 64, parent prefix 1 is split off from the to-be-stored IPv6 prefix, and the prefix length of parent prefix 1 is 64. In response to determining the exact-matching bit count of the current node is 96, parent prefix 2 is split off from the to-be-stored IPv6 prefix, and the prefix length of parent prefix 2 is 96. In response to determining the exact-matching bit count of the current node is 112, process S15 is executed, that is, parent prefix 3 and tail prefix 4 are split off from the to-be-stored IPv6 prefix, the prefix length of parent prefix 3 is 104 (that is, 112-8), and the prefix length of tail prefix 4 is 8. Based on this, parent prefix 1 corresponds to invalid information in the data structure, parent prefix 2 corresponds to invalid information in the data structure, parent prefix 3 corresponds to index information in the data structure, and the index information is to indicate the specified positions of tail prefix 4 and the forwarding information in the prefix trie.

Assume that the prefix length of the to-be-stored IPv6 prefix is 70. In response to determining the exact-matching bit count of the current node is 64, parent prefix 1 and tail prefix 2 are split off from the to-be-stored IPv6 prefix, the prefix length of parent prefix 1 is 64, and the prefix length of tail prefix 2 is 6 (70-64). In response to determining the exact-matching bit count of the current node is 96, since 70 is less than 96, a parent prefix with a prefix length of 96 is not split off. In response to determining the exact-matching bit count of the current node is 80, since 70 is less than 80, a parent prefix with a prefix length of 80 is not split off. In response to determining the exact-matching bit count of the current node is 72, since 70 is less than 72, the process ends. Based on this, parent prefix 1 is the parent prefix with the longest prefix length of the to-be-stored IPv6 prefix, tail prefix 2 and the forwarding information are stored in the prefix trie corresponding to parent prefix 1, parent prefix 1 corresponds to index information in the data structure, and the index information is to indicate the specified position of the prefix trie corresponding to parent prefix 1.

In an example, if M is 8, for the splitting process of the to-be-stored IPv6 prefix, the to-be-stored IPv6 prefix is split in a manner of 8 bits per segment, and is finally split into 16 segments, such as 8 bits, 16 bits, 24 bits, 32 bits, 40 bits, 48 bits, 56 bits, 64 bits, 72 bits, 80 bits, 88 bits, 96 bits, 104 bits, 112 bits, 120 bits, and 128 bits. The splitting rules may refer to Table 1. In Table 1, prefix length (prefixlen) represents the prefix length of the to-be-stored IPv6 prefix, and the network segment represents the prefix length of the split parent prefix.

**Table 1**

| Prefixlen | After being spilt |
|---|---|
| [0, 8) | not spilt |
| 8 | not spilt |
| (8, 16) | 8 network segment, (prefixlen-8)network segment |
| 16 | not spilt |
| (16, 24) | 16 network segment, (prefixlen-16)network segment |
| 24 | 16 network segment, tail 8 network segment |
| (24, 32) | 16 network segment, 24 network segment, (prefixlen-24)network segment |
| 32 | 16 network segment, 24 network segment, tail 8 network segment |
| (32, 40) | 32 network segment, (prefixlen-32)network segment |
| 40 | 32 network segment, tail 8 network segment |
| (40, 48) | 32 network segment, 40 network segment, (prefixlen-40)network segment |
| 48 | 32 network segment, 40 network segment, tail 8 network segment |
| (48, 56) | 32 network segment, 48 network segment, (prefixlen-48)network segment |
| 56 | 32 network segment, 48 network segment, tail 8 network segment |
| (56, 64) | 32 network segment, 48 network segment, 56 network segment, (prefixlen-56)network segment |
| 64 | 32 network segment, 48 network segment, 56 network segment, tail 8 network segment |
| (64, 72) | 64 network segment, (prefixlen-64)network segment |
| 72 | 64 network segment, tail 8 network segment |
| (72, 80) | 64 network segment, 72 network segment, (prefixlen-72)network segment |
| 80 | 64 network segment, 72 network segment, tail 8 network segment |
| (80, 88) | 64 network segment, 80 network segment, (prefixlen-80)network segment |
| 88 | 64 network segment, 80 network segment, tail 8 network segment |
| (88, 96) | 64 network segment, 80 network segment, 88 network segment, (prefixlen- 8)network segment |
| 96 | 64 network segment, 80 network segment, 88 network segment, tail 8 network segment |
| (96, 104) | 64 network segment, 96 network segment, (prefixlen-96)network segment |
| 104 | 64 network segment, 96 network segment, tail 8 network segment |
| (104, 112) | 64 network segment, 96 network segment, 104network segment, (prefixlen-104)network segment |
| 112 | 64 network segment, 96 network segment, 104network segment, tail 8 network segment |
| (112, 120) | 64 network segment, 96 network segment, 120 network segment112 network segment, (prefixlen-112)network segment |
| 120 | 64 network segment, 96 network segment, 120 network segment112 network segment, tail 8 network segment |
| (120, 128) | 64 network segment, 96 network segment, 120 network segment112 network segment, 120network segment, (prefixlen-120)network segment |
| 128 | 64 network segment, 96 network segment, 120 network segment112 network segment, 120network segment, tail 8 network segment |

For example, for a to-be-stored IPv6 prefix, "2001:12:34:56:78:9a:bc:/112", the above-mentioned method may be to divide the to-be-stored IPv6 prefix into 3 parent prefixes and 1 tail prefix. The 3 parent prefixes are 2001:12:34:56::/64, 2001:12:34:56:78:9a::/96, and 2001:12:34:56:78:9a::/104 respectively. The prefix length of the first parent prefix is 64, the prefix length of the second parent prefix is 96, and the prefix length of the third parent prefix is 104 (112-8). The 1 tail prefix is bc/8, that is, the prefix length of the tail prefix is 8.

For example, for a to-be-stored IPv6 prefix, "2002:11:F000::/40", the above-mentioned method may be to divide the to-be-stored IPv6 prefix into 1 parent prefix and 1 tail prefix. The 1 parent prefix is 2002:11::/32, that is, the prefix length of the parent prefix is 32. The 1 tail prefix is F0/8, that is, the prefix length of the tail prefix is 8.

For example, taking the addition process of the to-be-stored IPv6 prefix "2001::1234:5678:abcd:11f0/124" as an example, this section introduces how to add the IPv6 prefix

First, the to-be-stored IPv6 prefix may be split into 4 parent prefixes and 1 tail prefix. The 4 parent prefixes are 2001::/64 with a prefix length of 64, 2001::1234:5678:0:0/96 with a prefix length of 96, 2001::1234:5678:abcd:0/112 with a prefix length of 112, and 2001::1234:5678:abcd:1100/120 with a prefix length of 120. The 1 tail prefix may be f0/4 with a prefix length of 4.

Then, add the parent prefix 2001::/64 with a prefix length of 64 to the data structure of the node with an exact-match bit count of 64. This parent prefix corresponds to invalid information (NULL) in this data structure.

Add the parent prefix 2001::1234:5678:0:0/96 with a prefix length of 96 to the data structure of the node with an exact-match bit count of 96. This parent prefix corresponds to invalid information (NULL) in this data structure.

Add the parent prefix 2001::1234:5678:abcd:0/112 with a prefix length of 112 to the data structure of the node with an exact-match bit count of 112. This parent prefix corresponds to invalid information (NULL) in this data structure.

Add the parent prefix 2001::1234:5678:abcd:1100/120 with a prefix length of 120 to the data structure of the node with an exact-match bit count of 120. This parent prefix corresponds to valid information in this data structure.

Add the tail prefix f0/4 with a prefix length of 4 and the forwarding information of the to-be-stored IPv6 prefix to the prefix trie corresponding to the parent prefix 2001::1234:5678:abcd:1100/120. The above-mentioned valid information is to indicate a specified position in the prefix trie, and then the tail prefix f0/4 and the forwarding information of the to-be-stored IPv6 prefix may be found from the prefix trie.

For example, regarding the deletion process of the to-be-stored IPv6 prefix, the deletion process is similar to the addition process. First, split the to-be-stored IPv6 prefix, and then find and delete the corresponding data from the data structure.

In an example, the following processes may also be to split the to-be-stored IPv6 prefix.

Process S31: determine the node at the first level of the BHT as the current node.

Process S32: compare the prefix length of the to-be-stored IPv6 prefix with the exact-match bit count of the current node. If the prefix length of the to-be-stored IPv6 prefix is greater than the exact-match bit count of the current node, perform process S33. If the prefix length of the to-be-stored IPv6 prefix is less than the exact-match bit count of the current node, perform process S34. If the prefix length of the to-be-stored IPv6 prefix is equal to the exact-match bit count of the current node, perform process S35.

Process S33: split off a parent prefix from the to-be-stored IPv6 prefix, where the prefix length of the parent prefix is this exact-match bit count. Determine the first child node of the current node as the updated current node and perform process S16.

Process S34: use the second child node of the current node as the updated current node and perform process S16.

Process S35: split off a parent prefix from the to-be-stored IPv6 prefix and stop updating the current node, that is, complete the splitting process of the to-be-stored IPv6 prefix. For example, the prefix length of the parent prefix may be the exact-match bit count of the current node. Compared with process S20, if the prefix length of the to-be-stored IPv6 prefix is equal to the exact-match bit count of the current node, it is not necessary to split off a tail prefix from the to-be-stored IPv6 prefix.

Suppose the exact-match bit count of the current node is 64 and the prefix length of the to-be-stored IPv6 prefix is 64. Then the first 64 bits of the to-be-stored IPv6 prefix may be split out to obtain a parent prefix with a prefix length of 64 bits, that is, the to-be-stored IPv6 prefix itself serves as a parent prefix with a prefix length of 64 bits.

After splitting off a parent prefix from the to-be-stored IPv6 prefix, the target node corresponding to this parent prefix may be looked up from the BHT. For example, the exact-match bit count of the target node may be 64. Add this parent prefix to the data structure of the target node. Considering that after splitting off a parent prefix from the to-be-stored IPv6 prefix, the updating of the current node is stopped, this parent prefix is the parent prefix with the longest prefix length of the to-be-stored IPv6 prefix. This parent prefix corresponds to valid information in the data structure, and this valid information may include the forwarding information of the to-be-stored IPv6 prefix (such as the outgoing interface, next hop, etc.). In summary, it may be seen that this parent prefix corresponds to forwarding information in the data structure, rather than index information of a specified position in the prefix trie.

In this way, in response to determining the valid information corresponding to this parent prefix in the data structure is looked up through the IPv6 address to be looked up, since the valid information is the forwarding information of the to-be-stored IPv6 prefix, the valid information may be directly obtained without finding the forwarding information of the to-be-stored IPv6 prefix from the specified position in the prefix trie.

Process S36: on the basis of process S33 or process S34, determine whether the current node is the last-level node based on the updated current node. If not, return to process S32 and repeatedly perform the operation of comparing the prefix length of the to-be-stored IPv6 prefix with the exact-match bit count of the current node. If yes, perform process S37.

Process S37: compare the prefix length of the to-be-stored IPv6 prefix with the exact-match bit count of the current node. If the prefix length of the to-be-stored IPv6 prefix is greater than the exact-match bit count of the current node, perform process S38. If the prefix length of the to-be-stored IPv6 prefix is less than the exact-match bit count of the current node, perform process S39. If the prefix length of the to-be-stored IPv6 prefix is equal to the exact-match bit count of the current node, perform process S40.

Process S38: split off a parent prefix from the to-be-stored IPv6 prefix and stop updating the current node. The prefix length of this parent prefix is the exact-match bit count of the current node.

In an example, in response to determining a certain node serves as the current node, if the prefix length of the to-be-stored IPv6 prefix is greater than the exact-match bit count of the current node, the difference between the prefix length of the to-be-stored IPv6 prefix and the exact-match bit count of the current node may also be calculated. If the difference between the prefix length of the to-be-stored IPv6 prefix and the exact-match bit count of the current node is not greater than M, a tail prefix may be split off from the to-be-stored IPv6 prefix, and the prefix length of this tail prefix is the difference between the prefix length of the to-be-stored IPv6 prefix and the exact-match bit count of the current node.

In some examples, if the difference between the prefix length of the to-be-stored IPv6 prefix and the exact-match bit count of the current node is less than M, a tail prefix may be split off from the to-be-stored IPv6 prefix, and the prefix length of this tail prefix is the difference between the prefix length of the to-be-stored IPv6 prefix and the exact-match bit count of the current node. If the difference between the prefix length of the to-be-stored IPv6 prefix and the exact-match bit count of the current node is equal to M, no tail prefix is split off from the to-be-stored IPv6 prefix.

Process S39: stop updating the current node, that is, complete the splitting process of the to-be-stored IPv6 prefix.

Processes S36-S39 may refer to processes S16-S19 and will not be repeated here.

Process S40: split off a parent prefix from the to-be-stored IPv6 prefix and stop updating the current node. For example, the prefix length of the parent prefix may be the exact-match bit count of the current node.

For example, the implementation process of process S40 is similar to that of process S35 and will not be repeated here.

In an example, if M is 8, for the splitting process of the to-be-stored IPv6 prefix, the to-be-stored IPv6 prefix may be split in segments of 8 bits each, and finally split into 16 segments, such as 8 bits, 16 bits, 24 bits, 32 bits, 40 bits, 48 bits, 56 bits, 64 bits, 72 bits, 80 bits, 88 bits, 96 bits, 104 bits, 112 bits, 120 bits, and 128 bits. For example, for a to-be-stored IPv6 prefix with a prefix length of 16, the to-be-stored IPv6 prefix may also be split into two parent prefixes with a prefix length of 8. For IPv6 prefixes to be stored with prefix lengths of 32, 64, and 128, no splitting may be performed, that is, the parent prefix is the to-be-stored IPv6 prefix.

For IPv6 prefixes to be stored with prefix lengths of 24, 40, 48, 56, 72, 80, 88, 96, 104, 112, and 120, if the prefix length of the to-be-stored IPv6 prefix is the same as the exact-match bit count, the splitting rules may refer to Table 2. The splitting process may refer to process S35, that is, it is not necessary to split off a parent prefix and a tail prefix, and only a parent prefix needs to be split off. In addition, if the prefix length of the to-be-stored IPv6 prefix is different from the exact-match bit count, the splitting rules may refer to Table 1 and will not be repeated here.

**Table 2**

| Prefix length | After being spilt |
|---|---|
| 24 | 16 network segment, 24 network segment |
| 40 | 32 network segment, 40 network segment |
| 48 | 32 network segment, 48 network segment |
| 56 | 32 network segment, 48 network segment, 56 network segment |
| 72 | 64 network segment, 72 network segment |
| 80 | 64 network segment, 80 network segment |
| 88 | 64 network segment, 80 network segment, 88 network segment |
| 96 | 64 network segment, 96 network segment |
| 104 | 64 network segment, 96 network segment, 104network segment |
| 112 | 64 network segment, 96 network segment, 120 network segment112 network segment |
| 120 | 64 network segment, 96 network segment, 120 network segment112 network segment, 120network segment |

In one example, if the value of M is 4, 8, 16, or 32, that is, the value of M is not 1 or 2, then the following processes may also be employed to split the to-be-stored IPv6 prefix.

Process S41: determine the node at the first level of the BHT as the current node.

Process S42: compare the prefix length of the to-be-stored IPv6 prefix with the exact-match bit count of the current node. If the prefix length of the to-be-stored IPv6 prefix is greater than the exact-match bit count of the current node, perform process S43. If the prefix length of the to-be-stored IPv6 prefix is not greater than the exact-match bit count of the current node, perform process S44.

Process S43: split off a parent prefix from the to-be-stored IPv6 prefix. After splitting off the parent prefix, determine the first child node of the current node as the updated current node, and then process S45 may be performed.

In one example, if the prefix length of the to-be-stored IPv6 prefix is greater than the exact-match bit count of the current node, the difference between the prefix length of the to-be-stored IPv6 prefix and the exact-match bit count of the current node may also be calculated, and denoted as the difference R. If the difference R is greater than M, the tail prefix is not split off at the current node, that is, only the parent prefix is split off, and the prefix length of the parent prefix is the exact-match bit count of the current node.

If the difference R is not greater than M, the parent prefix and the tail prefix are split off at the current node. If the difference R is greater than M/2, the prefix length of the parent prefix is the exact-match bit count of the current node, and the prefix length of the tail prefix is the difference R. In some examples, if the difference R is not greater than M/2, for example, if the difference R is within the interval [1, M/2], the prefix length of the parent prefix is the difference between the exact-match bit count of the current node and M, and the prefix length of the tail prefix is the sum of the difference R and M.

Process S44: In response to determining the prefix length of the to-be-stored IPv6 prefix is less than the exact-match bit count of the current node, or in response to determining the prefix length of the to-be-stored IPv6 prefix is equal to the exact-match bit count of the current node, determine the second child node of the current node as the updated current node, and then process S45 may be performed.

Process S45: Based on the updated current node, determine whether the current node is the last-level node. If not, process S42 may be returned to, and the operation of comparing the prefix length of the to-be-stored IPv6 prefix with the exact-match bit count of the current node is repeatedly performed. If yes, process S46 may be performed.

Process S46: Compare the prefix length of the to-be-stored IPv6 prefix with the exact-match bit count of the current node. If the prefix length of the to-be-stored IPv6 prefix is greater than the exact-match bit count of the current node, perform process S47. If the prefix length of the to-be-stored IPv6 prefix is less than the exact-match bit count of the current node, perform process S48. If the prefix length of the to-be-stored IPv6 prefix is equal to the exact-match bit count of the current node, perform process S49.

Process S47: Split off a parent prefix from the to-be-stored IPv6 prefix, and stop updating the current node.

For example, the difference between the prefix length of the to-be-stored IPv6 prefix and the exact-match bit count of the current node is calculated and denoted as the difference R. If the difference R is greater than M, the tail prefix is not split off at the current node, that is, only the parent prefix is split off, and the prefix length of the parent prefix is the exact-match bit count of the current node. If the difference R is not greater than M, the parent prefix and the tail prefix are split off at the current node. If the difference R is greater than M/2, the prefix length of the parent prefix is the exact-match bit count of the current node, and the prefix length of the tail prefix is the difference R. In some examples, if the difference R is not greater than M/2, the prefix length of the parent prefix is the difference between the exact-match bit count of the current node and M, and the prefix length of the tail prefix is the sum of the difference R and M.

For example, if the prefix length of the to-be-stored IPv6 prefix is 121, and the exact-match bit count of the current node is 120, since the difference R is 1 and the difference R is not greater than 4, the prefix length of the parent prefix is 112, and the prefix length of the tail prefix is 9, that is, the prefix length of the parent prefix is not 120. For example, if the prefix length of the to-be-stored IPv6 prefix is 124, and the exact-match bit count of the current node is 120, since the difference R is 4 and the difference R is not greater than 4, the prefix length of the parent prefix is 112, and the prefix length of the tail prefix is 12, that is, the prefix length of the parent prefix is not 120. For example, if the prefix length of the to-be-stored IPv6 prefix is 125, and the exact-match bit count of the current node is 120, since the difference R is 5 and the difference R is greater than 4, the prefix length of the parent prefix is 120, and the prefix length of the tail prefix is 5.

Based on the above processing, the prefix length of the tail prefix may be made to be greater than M/2 (e.g., 4). In this way, in the prefix trie, the tail prefix may be represented by a three-level prefix trie, the number of parent prefixes in the HASH is reduced, and the HASH look up performance is improved.

Process S48: Stop updating the current node.

Process S49: Split off a parent prefix and a tail prefix from the to-be-stored IPv6 prefix, and stop updating the current node. For example, the prefix length of the parent prefix may be the difference between the exact-match bit count of the current node and M, and the prefix length of the tail prefix may be M. Obviously, the prefix length of the tail prefix is greater than M/2.

Third, a look up process for a to-be-looked up IPv6 address based on the BHT.

In one example, after the BHT is constructed and a large number of IPv6 prefixes to be stored are stored in the BHT, the BHT is to look up the forwarding information corresponding to the to-be-looked up IPv6 address. For example, after the to-be-looked up IPv6 address is obtained, the forwarding information corresponding to the to-be-looked up IPv6 address may be looked up using the following processes.

Process S51: Determine the node at the first level of the BHT as the current node.

Process S52: Perform a mask operation on the to-be-looked up IPv6 address based on the exact-match bit count of the current node to obtain a candidate prefix of the to-be-looked up IPv6 address. For example, the mask operation is to keep the first A values of the to-be-looked up IPv6 address unchanged, and set the last B values of the to-be-looked up IPv6 address to zero. A may be the exact-match bit count of the current node, and B may be the difference between the length of the to-be-looked up IPv6 address and A.

For example, the to-be-looked up IPv6 address may be 128 bits. If the exact-match bit count of the current node is 64, the first 64 values of the to-be-looked up IPv6 address are kept unchanged through the mask operation, and the last 64 values of the to-be-looked up IPv6 address are set to zero to obtain the candidate prefix of the to-be-looked up IPv6 address. If the exact-match bit count of the current node is 96, the first 96 values of the to-be-looked up IPv6 address are kept unchanged through the mask operation, and the last 32 values of the to-be-looked up IPv6 address are set to zero to obtain the candidate prefix of the to-be-looked up IPv6 address.

Process S53: If the candidate prefix successfully matches a reference parent prefix in the data structure of the current node, determine the first child node of the current node as the updated current node; if the reference parent prefix corresponds to valid information in the data structure, record the valid information corresponding to the reference parent prefix; if the reference parent prefix corresponds to invalid information in the data structure, no recording is performed. If the candidate prefix fails to match all parent prefixes in the data structure of the current node, determine the second child node of the current node as the updated current node.

For example, there are a large number of parent prefixes in the data structure of the current node, and the candidate prefix of the to-be-looked up IPv6 address may be sequentially matched with each parent prefix in the data structure, and there is no limitation on this matching process. If the candidate prefix is the same as a certain parent prefix, this parent prefix is referred to as a reference parent prefix, and the candidate prefix successfully matches the reference parent prefix. If the candidate prefix is different from all parent prefixes in the data structure, the candidate prefix fails to match all parent prefixes in the data structure of the current node.

If the candidate prefix successfully matches the reference parent prefix in the data structure, the first child node of the current node may be determined as the updated current node. If the candidate prefix fails to match all parent prefixes in the data structure, the second child node of the current node may be determined as the updated current node.

If the candidate prefix successfully matches the reference parent prefix in the data structure, it may also be determined whether the reference parent prefix corresponds to valid information or invalid information in the data structure. If the reference parent prefix corresponds to valid information, the valid information corresponding to the reference parent prefix may be recorded. If the reference parent prefix corresponds to invalid information, the information corresponding to the reference parent prefix is not recorded.

Process S54: Based on the updated current node, determine whether the current node is the last-level node.

If not, process S52 may be returned to, and the mask operation is repeatedly performed on the to-be-looked up IPv6 address based on the exact-match bit count of the current node to obtain the candidate prefix of the to-be-looked up IPv6 address.

If yes, process S55 may be performed.

Process S55: Perform a mask operation on the to-be-looked up IPv6 address based on the exact-match bit count of the current node to obtain a candidate prefix. If the candidate prefix successfully matches the reference parent prefix in the data structure of the current node and the reference parent prefix corresponds to valid information, record the valid information corresponding to the reference parent prefix, and perform process S56. If the candidate prefix successfully matches the reference parent prefix in the data structure of the current node and the reference parent prefix corresponds to invalid information, the information corresponding to the reference parent prefix is not recorded, and perform process S56. If the candidate prefix fails to match all parent prefixes in the data structure of the current node, perform process S56.

Process S56: Determine the forwarding information of the to-be-looked up IPv6 address based on the valid information corresponding to the recorded reference parent prefix with the longest prefix length. For example, if the valid information corresponding to the reference parent prefix with the longest prefix length is index information, the specified location of the prefix trie is looked up through the index information, and the forwarding information of the to-be-looked up IPv6 address is looked up from the specified location. In some examples, if the valid information corresponding to the reference parent prefix with the longest prefix length is forwarding information, the forwarding information is determined as the forwarding information of the to-be-looked up IPv6 address.

For example, the to-be-looked up IPv6 address "2001::1234:5678:abcd:11f1" is taken as an example for illustration. As shown in FIG. 3B, first, the node with an exact-match bit count of 128 is taken as the current node, a mask operation is performed on the to-be-looked up IPv6 address based on the exact-match bit count of 128 to obtain a 128-bit candidate prefix.

If the 128-bit candidate prefix fails to match all parent prefixes in the data structure of the current node, the node with an exact-match bit count of 64 is taken as the current node. A mask operation is performed on the to-be-looked up IPv6 address "2001::1234:5678:abcd:11f1" based on the exact-match bit count of 64 to obtain a 64-bit candidate prefix.

The 64-bit candidate prefix is to look up the data structure of the current node. If the candidate prefix successfully matches the reference parent prefix "2001::/64" in the data structure, the valid information (if any) corresponding to the reference parent prefix "2001::/64" in the data structure is recorded. The node with an exact-match bit count of 96 (the first child node of the node with an exact-match bit count of 64) is taken as the current node. A mask operation is performed on the to-be-looked up IPv6 address "2001::1234:5678:abcd:11f1" based on the exact-match bit count of 96 to obtain a 96-bit candidate prefix.

Then, the 96-bit candidate prefix is to look up the data structure of the current node. If the candidate prefix successfully matches the reference parent prefix "2001::1234:5678:0:0/96" in the data structure, the valid information corresponding to the reference parent prefix "2001::1234:5678:0:0/96" in the data structure is recorded.

Then, the node with an exact-match bit count of 112 is taken as the current node. A mask operation is performed on the to-be-looked up IPv6 address based on the exact-match bit count of 112 to obtain a 112-bit candidate prefix.

The 112-bit candidate prefix is to look up the data structure of the current node. If the candidate prefix successfully matches the reference parent prefix "2001::1234:5678:abcd:0/112" in the data structure of the current node, the valid information corresponding to the reference parent prefix "2001::1234:5678:abcd:0/112" in the data structure is recorded.

Then, the node with an exact-match bit count of 120 is taken as the current node. A mask operation is performed on the to-be-looked up IPv6 address based on the exact-match bit count of 120 to obtain a 120-bit candidate prefix.

The 120-bit candidate prefix is to look up the data structure of the current node. If the candidate prefix successfully matches the reference parent prefix "2001::1234:5678:abcd:1100/120" in the data structure of the current node, the valid information corresponding to the reference parent prefix "2001::1234:5678:abcd:1100/120" in the data structure is recorded.

Up to now, the valid information corresponding to a plurality of reference parent prefixes is recorded. Based on each reference parent prefix, the reference parent prefix with the longest prefix length is selected, such as the reference parent prefix "2001::1234:5678:abcd:1100/120". Then, based on the valid information corresponding to the reference parent prefix with the longest prefix length, the forwarding information of the to-be-looked up IPv6 address may be determined, and thus the look up process for the forwarding information of the to-be-looked up IPv6 address is completed.

In conclusion, as shown in FIG. 3A, there are a total of 4 levels of nodes, so a maximum of 4 look up operations may be performed to complete a look up for an IPv6 FIB. As shown in FIG. 3B, there are a total of 5 levels of nodes, so a maximum of 5 look up operations may be performed to complete a look up for an IPv6 FIB. In this way, compared with the bihash algorithm of VPP (which requires a maximum of 129 operations), there is a significant performance improvement.

In addition, in response to determining looking up the prefix trie through valid information (i.e., index information of the specified location of the prefix trie), only 2 memory accesses are required, the performance is already optimal, and CPU pipeline processing is supported.

Fourth, an implementation manner of the data structure for each node of the BHT.

In one example, for each node of the BHT, the node corresponds to a data structure, and the data structure is to record all parent prefixes corresponding to the node and the invalid information (NULL) or valid information (such as index information or forwarding information) corresponding to each parent prefix. For example, the first record of the data structure is to record parent prefix 1 and the invalid information or valid information corresponding to parent prefix 1, and so on.

For example, the data structure may adopt a hash data structure or other data structures, and there is no limitation on the type of the data structure. Taking a hash data structure as an example, in response to determining the data structure adopts a hash data structure, the data structure includes a plurality of hash buckets, and the data structure corresponds to P feature bits, where P is a positive integer greater than 1. For each parent prefix corresponding to the node, based on the values corresponding to the P feature bits in the parent prefix, the hash bucket corresponding to the parent prefix in the data structure is determined, and the parent prefix and the invalid information or valid information corresponding to the parent prefix are stored in the hash bucket.

For example, assume that the data structure corresponds to 10 feature bits. For each parent prefix, if the prefix length of the parent prefix is 64, 10 values corresponding to the 10 feature bits are selected from the 64 values of the parent prefix. A hash algorithm is to perform a hash operation on these 10 values to obtain a hash value, and there is no limitation on this hash operation process. The hash bucket corresponding to the hash value is taken as the hash bucket corresponding to the parent prefix in the data structure, and the parent prefix and the invalid information or valid information corresponding to the parent prefix are stored in the hash bucket.

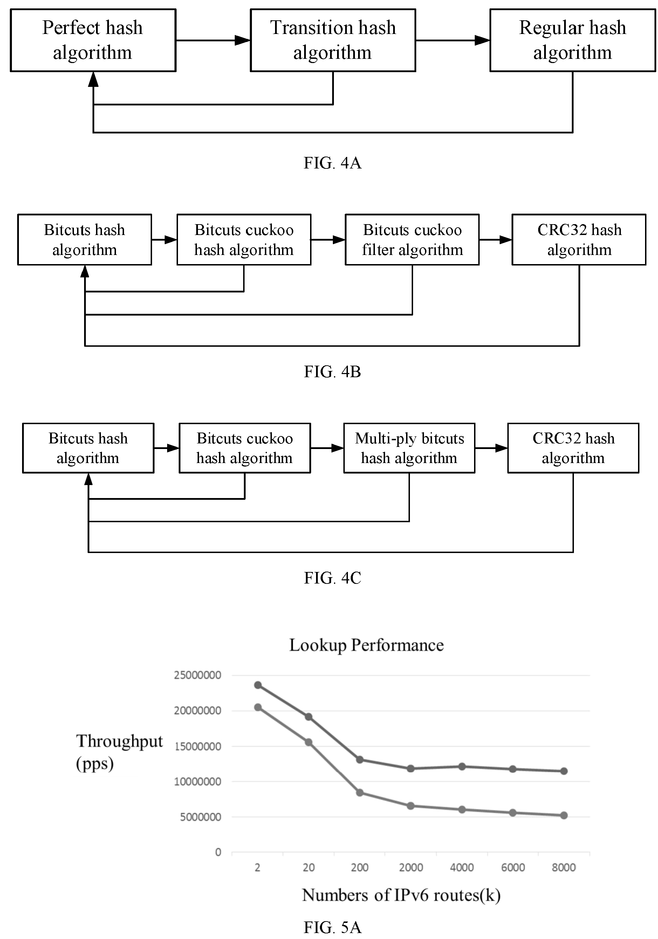

In one example, for the data structure corresponding to the node of the BHT, the data structure may adopt a perfect hash algorithm, a transitional hash algorithm, or a conventional hash algorithm. For example, as shown in FIG. 4A, which is a hash switching diagram of the data structure. If there is no hash conflict in response to determining the data structure adopts the perfect hash algorithm, the data structure adopts the perfect hash algorithm. If there is a hash conflict in response to determining the data structure adopts the perfect hash algorithm, and there is no hash conflict in response to determining the data structure adopts the transitional hash algorithm, the data structure adopts the transitional hash algorithm. If there is a hash conflict in response to determining the data structure adopts the perfect hash algorithm, there is a hash conflict in response to determining the data structure adopts the transitional hash algorithm, and there is no hash conflict in response to determining the data structure adopts the conventional hash algorithm, the data structure adopts the conventional hash algorithm.

As shown in FIG. 4B, which is a hash switching diagram of the data structure. If there is no hash conflict in response to determining the data structure adopts a bitcuts hash algorithm, the data structure adopts the bitcuts hash algorithm. If there is a hash conflict in response to determining the data structure adopts the bitcuts hash algorithm, and there is no hash conflict in response to determining the data structure adopts a bitcuts cuckoo hash algorithm, the data structure adopts the bitcuts cuckoo hash algorithm. If there is a hash conflict in response to determining the data structure adopts the bitcuts hash algorithm, there is a hash conflict in response to determining the data structure adopts the bitcuts cuckoo hash algorithm, and there is no hash conflict in response to determining the data structure adopts a bitcuts cuckoo filter algorithm, the data structure adopts the bitcuts cuckoo filter algorithm. If there is a hash conflict in response to determining the data structure adopts the bitcuts hash algorithm, there is a hash conflict in response to determining the data structure adopts the bitcuts cuckoo hash algorithm, there is a hash conflict in response to determining the data structure adopts the bitcuts cuckoo filter algorithm, and there is no hash conflict in response to determining the data structure adopts a CRC32 hash algorithm, the data structure adopts the CRC32 hash algorithm.

As shown in FIG. 4C, which is a hash switching diagram of the data structure. Compared with FIG. 4B, a multi-ply bitcuts hash algorithm may be to replace the bitcuts cuckoo filter algorithm.

In FIGS. 4B and 4C, the bitcuts hash algorithm may represent the perfect hash algorithm, the bitcuts cuckoo hash algorithm, the bitcuts cuckoo filter algorithm, and the multi-ply bitcuts hash algorithm may represent the transitional hash algorithm, and the CRC32 hash algorithm may represent the conventional hash algorithm.

Fifth, the data structure corresponding to the node of the BHT is implemented using the bitcuts hash algorithm.

In one example, in response to determining the data structure is implemented using the bitcuts hash algorithm (bit-cutting hash algorithm), the data structure includes a plurality of hash buckets, and the data structure corresponds to P feature bits, where P is a positive integer greater than 1. For each parent prefix corresponding to the node, based on the values corresponding to the P feature bits in the parent prefix, the hash bucket corresponding to the parent prefix in the data structure is determined. If the hash bucket is idle, the parent prefix corresponds to the hash bucket in the data structure, and the parent prefix and the invalid information or valid information corresponding to the parent prefix are stored in the hash bucket. If the hash bucket is occupied, the data structure cannot be implemented using the bitcuts hash algorithm, and based on the values corresponding to the P feature bits in the parent prefix, a transitional hash algorithm may be to determine the hash bucket corresponding to the parent prefix in the data structure.

In one implementation manner, the data structure with the least memory access times is an array. During the look up process, the exact-match data is used as the array index for access, and the result may be obtained with only 1 memory access. However, in the IPv6 FIB look up scenario, the address length is 16 bytes (128 bits). To achieve 1 memory access, an array with a length of 2^128 bytes is required for storage, which is not feasible in terms of memory usage.

In another implementation manner, the data structure that enables 1 memory access is a Hash data structure. In the IPv6 FIB look up scenario, a simple and low-time-consuming Hash function is required, which may completely place all parent prefixes in different hash buckets through calculation, that is, each hash bucket has at most 1 parent prefix.

In response to the above findings, the present application provides the bitcuts hash algorithm to meet the requirements of the IPv6 FIB look up scenario. In the bitcuts hash algorithm, by calculating the BSS (Bit Separability Set) value of each bit, where the BSS value is the product of the number of all 0 bits and the number of all 1 bits in the IPv6 prefix, the feature bits of all IPv6 prefixes are found, and the IPv6 prefixes are continuously divided until the divided IPv6 prefixes meet the conditions and the search is terminated. Then, based on all the feature bits, the hash value of each IPv6 prefix is calculated, and the IPv6 prefix is stored in a predetermined array (i.e., hash bucket) with the hash value of the IPv6 prefix as the array index. Regarding how to calculate the hash value, the values corresponding to all the feature bits may be extracted from the IPv6 prefix, and a certain algorithm may be to perform a hash operation on these values to obtain the hash value of the parent prefix. There is no limitation on the algorithm for calculating the hash value in the present application.

For example, in response to determining adding the first parent prefix to the data structure, the number of feature bits P is 0, and all parent prefixes may be completely hashed onto 2^0 = 1 hash bucket using the bitcuts hash algorithm.

In response to determining adding the second parent prefix to the data structure, the number of feature bits P is 1, and all parent prefixes may be completely hashed onto 2^1 = 2 hash buckets using the bitcuts hash algorithm.

In response to determining adding the third parent prefix to the data structure, the number of feature bits P is 2, and all parent prefixes may be completely hashed onto 2^2 = 4 hash buckets using the bitcuts hash algorithm.

In response to determining adding the fourth parent prefix to the data structure, the number of feature bits P is 2, and all parent prefixes may be completely hashed onto 2^2 = 4 hash buckets using the bitcuts hash algorithm.

In response to determining adding the fifth parent prefix to the data structure, the number of feature bits P is 3, and all parent prefixes may be completely hashed onto 2^3 = 8 hash buckets using the bitcuts hash algorithm.

And so on. In response to determining adding the a-th parent prefix to the data structure, the number of feature bits P is b, and all parent prefixes may be completely placed onto 2b hash buckets using the bitcuts hash algorithm, with at most one parent prefix per hash bucket. Obviously, in response to determining adding the a-th parent prefix, if the hash bucket for the a-th parent prefix is idle (no conflict), the a-th parent prefix may be simply placed into that hash bucket. In some examples, if the hash bucket for the a-th parent prefix is occupied (there is a conflict), an additional feature bit is added, increasing the number of feature bits to b, and all parent prefixes are completely hashed onto 2b hash buckets.

In summary, each time a parent prefix is added to the data structure, the number of feature bits may remain unchanged or may be increased. If the number of feature bits remains unchanged, the hash buckets for parent prefixes that have already been determined do not need to be updated; only the hash bucket for the newly added parent prefix needs to be determined. If the number of feature bits is increased, the hash bucket for each parent prefix needs to be redetermined.

In one example, the key to the bitcuts hash algorithm is to determine the number of feature bits. After the number of feature bits is determined, the corresponding feature bits may be selected, and all parent prefixes are hashed onto different hash buckets based on the feature bits, ensuring that each hash bucket has at most one parent prefix.

The number of feature bits determines the number of hash buckets, for example, the number of hash buckets is 2^P, where P is the number of feature bits. Obviously, the number of feature bits P cannot be infinitely large. To support IPv6 prefixes in the range of millions to tens of millions, the maximum number of feature bits P may be set to 24, resulting in 16,777,216 hash buckets that may accommodate 16 million routes and occupy an estimated 80 MB of memory.

Of course, a maximum number of feature bits P of 24 is merely an example in the present disclosure, and there is no limitation on the maximum number of feature bits P, which may be configured based on experience.

In response to determining adding the a-th parent prefix, if the hash bucket for the a-th parent prefix is idle, the a-th parent prefix may be simply placed into that hash bucket, meaning that all current parent prefixes may be completely spread across the hash buckets with at most one parent prefix per hash bucket. In some examples, if the hash bucket for the a-th parent prefix is occupied, it is determined whether the number of feature bits P has reached the maximum of 24. If not, an additional feature bit is added, and based on the added feature bit, all parent prefixes are completely hashed onto the hash buckets with at most one parent prefix per hash bucket. In some examples, if the number of feature bits P has reached the maximum of 24, the bitcuts hash algorithm cannot implement the data structure, and the implementation is degraded to a transitional hash algorithm (bitcuts cuckoo hash algorithm, bitcuts cuckoo filter algorithm, and multi-ply bitcuts hash algorithm).

In one example, after the number of feature bits is determined, the corresponding feature bits may be selected. For example, if the number of feature bits is P, then P feature bits are selected.

For example, in response to determining adding a parent prefix to the data structure, the BSS values of all parent prefixes are calculated, such as counting the number of parent prefixes with the first bit as 0, the number of parent prefixes with the first bit as 1, and the product of these two numbers is the BSS value of the first bit. Counting the number of parent prefixes with the second bit as 0, the number of parent prefixes with the second bit as 1, and the product of these two numbers is the BSS value of the second bit. And so on, the BSS value of each bit may be obtained.

Then, all bits are sorted in descending order of BSS values, and based on the sorted bits, the top P bits may be selected as feature bits. For example, in response to determining bits 5, 8, 9, 4, 2, etc., are used as feature bits, "5" indicates that the fifth value in the parent prefix is used as a feature bit.

For example, in response to determining adding a parent prefix to the data structure, the BSS value of the i-th bit may be calculated as follows: if the i-th bit of the newly added parent prefix is 0, then BSS_i = (Num0_i+1) × Num1_i; if the i-th bit of the newly added parent prefix is 1, then BSS_i = Num0_i × (Num1_i+1).

In response to determining deleting a parent prefix from the data structure, the BSS value of the i-th bit may be calculated as follows: if the i-th bit of the deleted parent prefix is 0, then BSS_i = (Num0_i-1) × Num1_i; if the i-th bit of the deleted parent prefix is 1, then BSS_i = Num0_i × (Num1_i-1).

i represents the i-th bit, BSS_i represents the BSS value of the i-th bit, Num0_i represents the number of parent prefixes with the i-th bit as 0, and Num1_i represents the number of parent prefixes with the i-th bit as 1.

For performance estimation of the bitcuts hash algorithm, the number of calculations equals the bit length of the parent prefix, for example, if the bit length of the parent prefix is 128 bits, the number of calculations is 128, which is not time-consuming. For memory estimation of the bitcuts hash algorithm, each bitcuts hash requires an array with 128 elements, with each element recording the bit number (1 byte), BSS value (8 bytes), number of 0 bits (4 bytes), and number of 1 bits (4 bytes) for each bit, totaling 2176 bytes of memory, which is relatively small.

In one example, after selecting the feature bits, a Bitcuts Hash look up may be performed based on the feature bits. For example, the values corresponding to the feature bits in the IPv6 address to be looked up are extracted as the index of the bitcuts hash bucket array to access the index in the corresponding hash bucket. Then, the corresponding parent prefix is found through the index in the bucket, and an exact-match is performed between the IPv6 address to be looked up and the parent prefix. If the index in the bucket is invalid or the exact-match fails, the parent prefix cannot be found; otherwise, the parent prefix may be hit.

Sixth, implementing the data structure corresponding to BHT nodes using a transitional hash algorithm or a conventional hash algorithm.

In one example, if the bitcuts hash algorithm cannot implement the data structure after the number of feature bits P reaches the maximum of 24 (configured based on experience), the implementation is degraded to a transitional hash algorithm to implement the data structure. The transitional hash algorithm may be a bitcuts cuckoo hash algorithm, which is described as follows.

In response to determining an additional feature bit is added, the number of hash buckets grows exponentially, i.e., 2^P, while the number of parent prefixes grows linearly, i.e., one by one, which leads to low memory space utilization of bitcuts hash and many empty hash buckets. Although this approach reduces the probability of hash conflicts, a small number of parent prefixes may occupy a large amount of memory, reducing look up performance. On this basis, bitcuts hash may be converted to bitcuts cuckoo hash to improve the space utilization of bitcuts hash with little impact on look up performance.

In response to determining implementing the data structure using the bitcuts cuckoo hash algorithm, the data structure includes a plurality of hash buckets and corresponds to P feature bits, where P is a positive integer greater than 1.

For each parent prefix, the first hash value and the second hash value are determined based on the values corresponding to P feature bits (e.g., 24 feature bits) in the parent prefix. For example, P values corresponding to the P feature bits are selected from all values of the parent prefix, and a hash algorithm is to perform a hash operation on these P values to obtain the first hash value. The first hash value plus a preset value (e.g., 1) gives the second hash value.

If the first hash bucket corresponding to the first hash value in the data structure is idle, it is determined that the parent prefix (for convenience of differentiation, referred to as parent prefix 1 hereinafter) corresponds to the first hash bucket in the data structure, and parent prefix 1 and the invalid or valid information corresponding to parent prefix 1 are stored in the first hash bucket.

If the first hash bucket is occupied and the parent prefix 2 already stored in the first hash bucket has not been moved (i.e., not moved from another hash bucket to the first hash bucket), parent prefix 2 already stored in the first hash bucket is moved to another hash bucket (the two hash values of parent prefix 2 also correspond to two hash buckets, one is the first hash bucket, and the other is a third hash bucket, then parent prefix 2 is moved to the third hash bucket), and it is determined that parent prefix 1 corresponds to the first hash bucket in the data structure, and parent prefix 1 and the invalid or valid information corresponding to parent prefix 1 are stored in the first hash bucket.

If the first hash bucket is occupied, the parent prefix 2 already stored in the first hash bucket has been moved (i.e., moved from another hash bucket to the first hash bucket), and the second hash bucket corresponding to the second hash value in the data structure is idle, it is determined that parent prefix 1 corresponds to the second hash bucket in the data structure, and parent prefix 1 and the invalid or valid information corresponding to parent prefix 1 are stored in the second hash bucket.

If the first hash bucket is occupied, the parent prefix 2 already stored in the first hash bucket has been moved, the second hash bucket is occupied, and the parent prefix 3 already stored in the second hash bucket has not been moved, parent prefix 3 already stored in the second hash bucket is moved to another hash bucket, and it is determined that parent prefix 1 corresponds to the second hash bucket in the data structure, and parent prefix 1 and the invalid or valid information corresponding to parent prefix 1 are stored in the second hash bucket.

If the first hash bucket is occupied, the parent prefix 2 already stored in the first hash bucket has been moved, the second hash bucket is occupied, and the parent prefix 3 already stored in the second hash bucket has been moved, the hash bucket corresponding to parent prefix 1 in the data structure cannot be determined, i.e., the bitcuts cuckoo hash algorithm fails.

For example, the first hash value is determined based on the P feature bits, i.e., the hash value determined by the bitcuts hash algorithm. The second hash value is obtained by adding an offset of +1 to the first hash value.

Considering that the first hash value and the second hash value correspond to two adjacent hash buckets, there is a high probability that they exist in the same cache line (the smallest caching unit in the cache), which may greatly reduce CPU cache misses and improve look up performance.

In response to determining performing a look up using the bitcuts cuckoo hash algorithm, two hash values, i.e., the first hash value and the second hash value, need to be calculated for the same IPv6 address to be looked up, and two hash buckets are found through these two hash values, i.e., the first hash bucket corresponding to the first hash value and the second hash bucket corresponding to the second hash value. If one of these two hash buckets matches the IPv6 address to be looked up, the IPv6 address to be looked up matches successfully; otherwise, the IPv6 address to be looked up matches unsuccessfully.

In one example, the transitional hash algorithm may be a bitcuts cuckoo filter algorithm, which is described as follows. Even if the bitcuts hash algorithm is degraded to the bitcuts cuckoo hash algorithm, there may still be conflicting parent prefixes. For example, in response to determining three parent prefixes with the same hash value are continuously added to bitcuts hash, the third parent prefix fails to be added because the third parent prefix cannot obtain a value from the second hash bucket.

Therefore, the bitcuts cuckoo filter algorithm may be to change the depth of the hash bucket from 1 to 2, i.e., a hash bucket may store two parent prefixes instead of one. For example, the bitcuts cuckoo filter algorithm may be implemented based on the bitcuts hash algorithm, allowing two parent prefixes with the same to-be-stored hash value simultaneously. In some examples, the bitcuts cuckoo filter algorithm may be implemented based on the bitcuts cuckoo hash algorithm, allowing four parent prefixes with the same to-be-stored hash value simultaneously.

In response to determining implementing the data structure using the bitcuts cuckoo filter algorithm, the data structure includes a plurality of hash buckets and corresponds to P feature bits, where P is a positive integer greater than 1.

For each parent prefix, the hash value is determined based on the values corresponding to P feature bits (e.g., 24 feature bits) in the parent prefix. For example, P values corresponding to the P feature bits are selected from all values of the parent prefix, and a hash algorithm is to perform a hash operation on these P values to obtain the hash value. If the hash bucket corresponding to the hash value in the data structure is idle, or if the hash bucket corresponding to the hash value in the data structure already stores one parent prefix, it is determined that the parent prefix corresponds to the hash bucket in the data structure, and the parent prefix and the invalid or valid information corresponding to the parent prefix are stored in the hash bucket.

In some examples, for each parent prefix, the first hash value and the second hash value are determined based on the values corresponding to P feature bits in the parent prefix. If the first hash bucket corresponding to the first hash value in the data structure is idle, it is determined that the parent prefix corresponds to the first hash bucket in the data structure, and the parent prefix and the invalid or valid information corresponding to the parent prefix are stored in the first hash bucket.

If the first hash bucket corresponding to the first hash value in the data structure already stores one parent prefix, it is determined that the parent prefix corresponds to the first hash bucket in the data structure, and the parent prefix and the invalid or valid information corresponding to the parent prefix are stored in the first hash bucket.

If the first hash bucket corresponding to the first hash value in the data structure already stores two parent prefixes, and the second hash bucket corresponding to the second hash value in the data structure is idle or stores one parent prefix, one parent prefix in the first hash bucket is migrated to the second hash bucket, it is determined that the parent prefix corresponds to the first hash bucket in the data structure, and the parent prefix and the invalid or valid information corresponding to the parent prefix are stored in the first hash bucket.

In one example, the transitional hash algorithm may be a multi-ply bitcuts hash algorithm, which is described as follows. Even if the bitcuts hash algorithm is degraded to the bitcuts cuckoo hash algorithm, there may still be conflicting parent prefixes. Therefore, the multi-ply bitcuts hash algorithm may be used. The multi-ply bitcuts hash algorithm calculates masks for a plurality of feature bits, e.g., N, based on the bitcuts hash, resulting in N layers for this multi-layer bit-cutting hash.

In response to determining implementing the data structure using the multi-ply bitcuts hash algorithm, all parent prefixes may be divided into N prefix sets, where N is a positive integer greater than 1. For each prefix set, the prefix set may include a plurality of parent prefixes and corresponds to P feature bits, where P is a positive integer greater than 1. The feature bits corresponding to different prefix sets are different; where the N prefix sets correspond one-to-one with N layers of hash bucket sets in the data structure, and each layer of hash bucket sets may include a plurality of hash buckets.

For example, prefix set 1 may include a plurality of parent prefixes 1-1000, prefix set 2 may include a plurality of parent prefixes 1001-2000, and so on. Prefix set 1 corresponds to P feature bits, e.g., feature bits 1-24, prefix set 2 corresponds to P feature bits, e.g., feature bits 25-48, and so on. The feature bits corresponding to prefix set 2 do not overlap with the feature bits corresponding to prefix set 1.

In response to determining implementing the data structure, the data structure includes N layers of hash bucket sets, and each layer of hash bucket sets includes a plurality of hash buckets of the bitcuts hash algorithm. Taking U hash buckets as an example, the data structure has a total of N*U hash buckets, rather than U hash buckets of the bitcuts hash algorithm. Based on the N layers of hash bucket sets, the N prefix sets correspond one-to-one with the N layers of hash bucket sets in the data structure, e.g., prefix set 1 corresponds to the hash bucket set of the first layer, prefix set 2 corresponds to the hash bucket set of the second layer, and so on.

For each parent prefix in the i-th prefix set, where i takes values from 1 to N in sequence, the hash bucket corresponding to the parent prefix in the i-th layer of hash bucket sets in the data structure may be determined based on the values corresponding to the P feature bits corresponding to the i-th prefix set in the parent prefix. For example, for each parent prefix in the first prefix set, the hash value is determined based on the values corresponding to the P (e.g., 24) feature bits corresponding to the first prefix set in the parent prefix. If the hash bucket corresponding to the hash value in the hash bucket set of the first layer in the data structure is idle, it is determined that the parent prefix corresponds to the hash bucket in the data structure, and the parent prefix and the invalid or valid information corresponding to the parent prefix are stored in the hash bucket.

For each parent prefix in the second prefix set, the hash value is determined based on the values corresponding to the P feature bits corresponding to the second prefix set in the parent prefix. If the hash bucket corresponding to the hash value in the hash bucket set of the second layer in the data structure is idle, it is determined that the parent prefix corresponds to the hash bucket in the data structure, and the parent prefix and the invalid or valid information corresponding to the parent prefix are stored in the hash bucket.

In one example, if the transitional hash algorithm cannot implement the data structure, the implementation is degraded to a conventional hash algorithm to implement the data structure. The conventional hash algorithm may be a CRC32 hash algorithm. For example, even if degraded to a transitional hash algorithm, there may still be conflicting parent prefixes. For example, in response to determining five parent prefixes with the same hash value are continuously added to bitcuts cuckoo filter, the fifth parent prefix fails to be added. Based on this, the data structure may be implemented using the CRC32 hash (Cyclic Redundancy Check hash) algorithm, and there is no limitation on the implementation process of the CRC32 hash algorithm in the present application.

In summary, to ensure look up performance and update performance and reduce the overhead of the conversion itself, the Hash conversion process may include the following processes: adding a parent prefix to bitcuts hash, and if the addition fails, converting to bitcuts cuckoo hash and adding the parent prefix to bitcuts cuckoo hash. The addition to bitcuts cuckoo hash will succeed, and the conversion process only requires modifying the hash type, with little impact on update performance.

Then, adding a parent prefix to bitcuts cuckoo hash, and if the addition fails, first attempting to convert to bitcuts hash and adding the parent prefix to bitcuts hash. If the addition succeeds, converting to bitcuts hash. If the addition fails, converting to bitcuts cuckoo filter and adding the parent prefix to bitcuts cuckoo filter. The addition to bitcuts cuckoo filter will succeed, and the conversion process only requires modifying the hash type.

Then, adding a parent prefix to bitcuts cuckoo filter, and if the addition fails, first attempting to convert to bitcuts hash and adding the parent prefix to bitcuts hash. If the addition succeeds, converting to bitcuts hash. If the addition fails, converting to CRC32 hash and adding the parent prefix to CRC32 hash. The addition to CRC32 hash will succeed, and the conversion process only requires modifying the hash type.

In response to determining converting from CRC32 hash to bitcuts hash, since CRC32 hash may always succeed in addition, the timing of its conversion to bitcuts hash is to start a timer on the control plane different from FIB route updates and attempt the conversion periodically. In response to determining the ratio of the total number of parent prefixes to the number of CRC32 hash buckets reaches a certain threshold, i.e., in response to determining the space utilization of the hash buckets is not high, attempt the conversion to bitcuts hash during incremental addition of parent prefixes.

For the process of deleting a parent prefix, no hash conversion is required. However, considering the space utilization of memory, a timer is started on the control plane different from FIB route updates to perform bitcuts hash conversion periodically and reclaim memory. Attempt to convert CRC32 hash to bitcuts hash periodically.

In one example, considering support for the CPU Pipeline, during hash conversion, direct conversion is performed on the hash for 128-bit nodes. Direct conversion is performed on the hash for 64-bit nodes. For 96-bit and 32-bit nodes at the same level, the hash conversion must be performed simultaneously, and if the hash conversion for any node fails, the hash conversion for all nodes at that level cannot be performed, ensuring the consistency of the hash type. For 112-bit, 80-bit, 48-bit, and 16-bit nodes at the same level, the hash conversion must be performed simultaneously, and if the hash conversion for any node fails, the hash conversion for all nodes at that level cannot be performed. For 120-bit, 104-bit, 88-bit, 72-bit, 56-bit, 40-bit, 24-bit, and 8-bit nodes at the same level, the hash conversion must be performed simultaneously, and if the hash conversion for any node fails, the hash conversion for all nodes at that level cannot be performed.

After the above processing, during the six matching processes of batch processing data packets, each data packet may find the result or look up the same data structure in each matching, thereby supporting the optimization of the CPU Pipeline.

From the above technical solutions, it may be seen that a BHT may be constructed to store IPv6 addresses through the BHT, look up IPv6 addresses through the BHT, support high-performance longest matching of IPv6 addresses, meet high-performance forwarding requirements, significantly improve the update and look up performance of IPv6 addresses, and reduce the memory space occupation of IPv6 addresses.

From the perspective of look up performance, the look up performance of the BHT algorithm (i.e., the algorithm adopted in the present application) varies for different prefixes. Taking the 16-segment type as an example, a minimum of only 1 look up operation is required, and a maximum of 6 look up operations are required (5 look up operations after splitting the 128 network segment), and the look up performance distribution is shown in Table 3.

**Table 3**

| Level | Prefix network segment |
|---|---|
| 1 | 128 network segment |
| 2 | 64 network segment |
| 3 | 32 network segment, 96 network segment |
| 4 | 120 network segment112 network segment, 80 network segment, 48 network segment, 16 network segment |
| 5 | 120network segment, , 104network segment, 88 network segment, 72 network segment, 56 network segment, 40 network segment, 24 network segment, 8 network segment |
| 6 | (120, 128) network segment, (112, 120) network segment, (104, 112) network segment, (96, 104) network segment, (88, 96) network segment, (80, 88) network segment, (72, 80) network segment, (64, 72) network segment, (56, 64) network segment, (48, 56) network segment, (40, 48) network segment, (32, 40) network segment, (24, 32) network segment, (16, 24) network segment, (8, 16) network segment, [0, 8) network segment |

As may be seen from Table 3, the smaller the Level (i.e., level) value, the higher the look up performance, and the look up performances of network segments with the same Level are similar. For the 128 network segment, after splitting, there are only 5 Levels, and the topmost one is the 64 network segment. In addition, the implementation method for the 8-segment type is similar and will not be repeatedly elaborated here.

From the perspective of memory usage, the BHT algorithm requires splitting IPv6 prefixes. Therefore, given the same IPv6 prefix, the more parent prefixes are split off, the greater the memory usage. For the number of split segments for each different network segment, reference may be made to Table 4. After splitting the 128 network segment, the topmost one is the (120, 128] network segment.

**Table 4**

| number of split segments | network segment |
|---|---|
| 5 | (120, 128) network segment |
| 4 | 120network segment, (112, 120) network segment, (104, 112) network segment, (88, 96) network segment, (56, 64) network segment |
| 3 | 120 network segment112 network segment, 104network segment, 88 network segment, 56 network segment, (80, 88) network segment, (72, 80) network segment, (48, 56) network segment, (40, 48) network segment, (24, 32) network segment |
| 2 | 96 network segment, 80 network segment, 72 network segment, 48 network segment, 40 network segment, 24 network segment, (64, 72) network segment, (32, 40) network segment, (16, 24) network segment, (8, 16) network segment |
| 1 | (0, 8) network segment, 0network segment, 8 network segment, 16 network segment, 32 network segment, 64 network segment, 128 network segment |

For instance, in scenarios with prefixes ranging from millions to tens of millions, the BHT algorithm may significantly enhance the look up performance of the IPv6 FIB. The advantages of the BHT algorithm are described below in terms of throughput, update performance, and memory usage.

Referring to FIG. 5A, which is a schematic diagram illustrating the effect on throughput, the x-axis represents the number of IPv6 prefixes (which may also be referred to as IPv6 routes), and the y-axis represents throughput, which reflects look up performance. In FIG. 5A, the upper line represents the throughput of the BHT algorithm, and the lower line represents the throughput of the bihash algorithm in VPP. Clearly, as the number of IPv6 prefixes increases, the look up performance of the BHT algorithm is significantly higher than that of the bihash algorithm in VPP. The greater the number of IPv6 prefixes, the larger the improvement in look up performance.

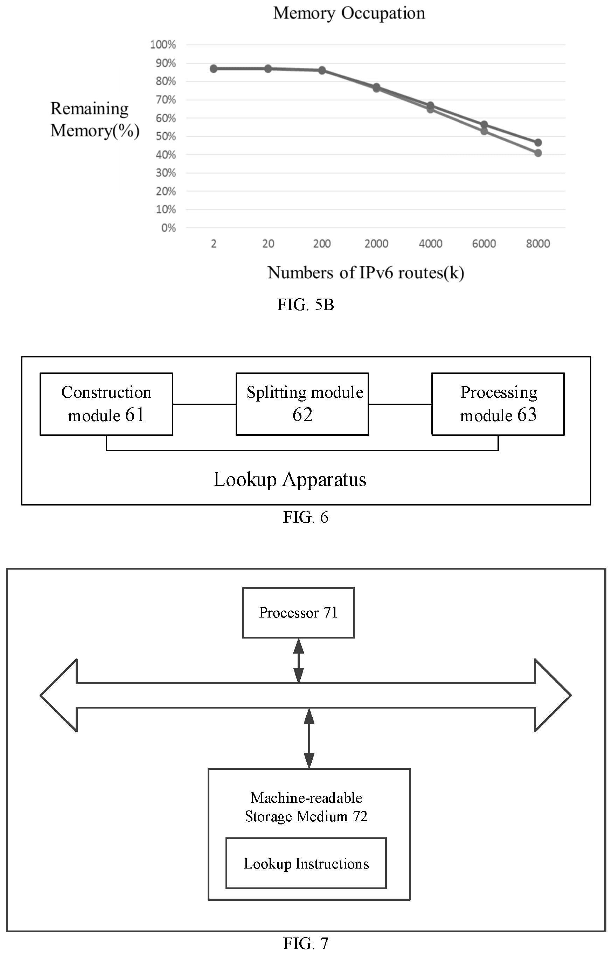

Referring to FIG. 5B, which is a schematic diagram illustrating the effect on memory usage, the x-axis represents the number of IPv6 prefixes (which may also be referred to as IPv6 routes), and the y-axis represents the percentage of remaining memory. In FIG. 5A, the upper line represents the percentage of remaining memory for the BHT algorithm, and the lower line represents the percentage of remaining memory for the bihash algorithm in VPP. Clearly, in response to determining the number of IPv6 prefixes is small, the memory usage of the two algorithms is comparable. After the number of IPv6 prefixes exceeds 2 million, the BHT algorithm has a higher percentage of remaining memory, indicating lower memory usage.

Based on the same inventive concept as the aforementioned method, an application of the present disclosure proposes a look up apparatus. Referring to FIG. 6, which is a structural schematic diagram of the look up apparatus, the apparatus may include:

A construction module 61, to construct a Bitcuts Hash Trie (BHT) based on a configured split bit M, wherein the BHT comprises a plurality of nodes, each node corresponds to an exact-match bit count and a data structure, and the exact-match bit count of each node is an integer a plurality of M; for each node except nodes at the last level, the node corresponds to a first child node and a second child node, the exact-match bit count of the first child node is greater than that of the node, and the exact-match bit count of the second child node is less than that of the node.

A splitting module 62, to determine one or more parent prefixes by splitting a to-be-stored IPv6 prefix based on the prefix length of the to-be-stored IPv6 prefix and the BHT, wherein the prefix length of each parent prefix is an integer a plurality of M.

A processing module 63, to, for each parent prefix, lookup a target node corresponding to the parent prefix from the BHT, wherein the exact-match bit count of the target node is the same as the prefix length of the parent prefix; add the parent prefix to the data structure of the target node; wherein if the parent prefix is not the parent prefix with the longest prefix length of the to-be-stored IPv6 prefix, the parent prefix corresponds to invalid information in the data structure; if the parent prefix is the parent prefix with the longest prefix length of the to-be-stored IPv6 prefix, the parent prefix corresponds to valid information in the data structure, and the valid information is to determine forwarding information corresponding to the to-be-stored IPv6 prefix.

Wherein, the BHT is to lookup forwarding information corresponding to an IPv6 address to be looked up.

In an example, for each node except nodes at the last level, the difference between the exact-match bit count of the first child node corresponding to the node and the exact-match bit count of the node is M*2 ^{(S-1)}, and the difference between the exact-match bit count of the node and the exact-match bit count of the second child node corresponding to the node is M*2 ^{(S-1)}.

Wherein, S represents the difference between the level number of nodes at the last level and the level number of the node.

In an example, in response to determining one or more parent prefixes by splitting the to-be-stored IPv6 prefix based on the prefix length of the to-be-stored IPv6 prefix and the BHT, the splitting module 62 is to:
determine a node at the first level of the BHT as a current node;
compare the prefix length of the to-be-stored IPv6 prefix with the exact-match bit count of the current node;
in response to determining the prefix length of the to-be-stored IPv6 prefix is greater than the exact-match bit count, split off a parent prefix from the to-be-stored IPv6 prefix , wherein the prefix length of the parent prefix is the exact-match bit count, and determining the first child node of the current node as an updated current node; in response to determining the prefix length of the to-be-stored IPv6 prefix is less than the exact-match bit count, determining the second child node of the current node as an updated current node;
determine, based on the updated current node, whether the current node is a node at the last level;
if not, repeatedly perform the operation of comparing the prefix length of the to-be-stored IPv6 prefix with the exact-match bit count of the current node; if yes, in response to determining the prefix length of the to-be-stored IPv6 prefix is greater than the exact-match bit count of the current node, splitting off a parent prefix from the to-be-stored IPv6 prefix, wherein the prefix length of the parent prefix is the exact-match bit count of the current node.

In an example, the splitting module 62 is further to, in response to determining the difference between the prefix length of the to-be-stored IPv6 prefix and the exact-match bit count of the current node is not greater than M, split off a tail prefix from the to-be-stored IPv6 prefix, wherein the prefix length of the tail prefix is the difference between the prefix length of the to-be-stored IPv6 prefix and the exact-match bit count of the current node.

In an example, the splitting module 62 is further to, for the parent prefix with the longest prefix length of the to-be-stored IPv6 prefix, store the tail prefix and the forwarding information of the to-be-stored IPv6 prefix in a prefix trie corresponding to the parent prefix; wherein the valid information corresponding to the parent prefix in the data structure comprises index information, and the index information is to indicate a specified position of the prefix trie to obtain the forwarding information based on the specified position.

In an example, the splitting module 62 is further to, if the prefix length of the to-be-stored IPv6 prefix is equal to the exact-match bit count, split off a parent prefix from the to-be-stored IPv6 prefix and stopping updating the current node, wherein the prefix length of the parent prefix is the exact-match bit count; wherein, for the parent prefix with the longest prefix length of the to-be-stored IPv6 prefix, the valid information corresponding to the parent prefix in the data structure comprises the forwarding information of the to-be-stored IPv6 prefix.

In some examples, if the prefix length of the to-be-stored IPv6 prefix is equal to the exact-match bit count, repeatedly performing the process of determining the second child node of the current node as an updated current node.

In an example, the apparatus further includes: a look up module, to, after obtaining an IPv6 address to be looked up, determine a node at the first level of the BHT as a current node; perform a mask operation on the IPv6 address to be looked up based on the exact-match bit count of the current node to obtain a candidate prefix of the IPv6 address to be looked up;
in response to determining the candidate prefix matches a reference parent prefix in the data structure of the current node, determine the first child node of the current node as an updated current node; if the reference parent prefix corresponds to valid information in the data structure, recording the valid information corresponding to the reference parent prefix;
in response to determining the candidate prefix fails to match all parent prefixes in the data structure of the current node, determine the second child node of the current node as an updated current node;
determine, based on the updated current node, whether the current node is a node at the last level;
if not, repeatedly perform a mask operation on the IPv6 address to be looked up based on the exact-match bit count of the current node to obtain a candidate prefix of the IPv6 address to be looked up;
if yes, perform a mask operation on the IPv6 address to be looked up based on the exact-match bit count of the current node to obtain a candidate prefix; if the candidate prefix matches a reference parent prefix in the data structure of the current node and the reference parent prefix corresponds to valid information, recording the valid information corresponding to the reference parent prefix;
determine forwarding information of the IPv6 address to be looked up based on the recorded valid information corresponding to the reference parent prefix with the longest prefix length.

In an example, for each node of the BHT, the data structure corresponding to the node comprises a plurality of hash buckets, and the data structure corresponds to P feature bits, where P is a positive integer greater than 1.

The processing module 63 is further to, for each parent prefix corresponding to the node, determine a hash bucket corresponding to the parent prefix in the data structure based on the values corresponding to the P feature bits in the parent prefix, and store the parent prefix and the invalid information or valid information corresponding to the parent prefix in the hash bucket.

In an example, in response to determining, based on the values corresponding to the P feature bits in the parent prefix, a hash bucket corresponding to the parent prefix in the data structure, the processing module 63 is to:

For each parent prefix, determine a hash bucket corresponding to the parent prefix in the data structure based on the values corresponding to the P feature bits in the parent prefix.

If the hash bucket is idle, determine that the parent prefix corresponds to the hash bucket in the data structure.

If the hash bucket is occupied, determine, based on the values corresponding to the P feature bits in the parent prefix, a hash bucket corresponding to the parent prefix in the data structure using a transition hash algorithm.

In an example, in response to determining, based on the values corresponding to the P feature bits in the parent prefix, a hash bucket corresponding to the parent prefix in the data structure, the processing module 63 is to:

For each parent prefix, determine a first hash value and a second hash value based on the values corresponding to the P feature bits in the parent prefix. If a first hash bucket corresponding to the first hash value in the data structure is idle, determine that the parent prefix corresponds to the first hash bucket in the data structure.

If the first hash bucket is occupied and the parent prefix stored in the first hash bucket has not been moved, move the parent prefix stored in the first hash bucket to another hash bucket and determine that the parent prefix corresponds to the first hash bucket in the data structure.

If the first hash bucket is occupied, the parent prefix stored in the first hash bucket has been moved, and a second hash bucket corresponding to the second hash value in the data structure is idle, determine that the parent prefix corresponds to the second hash bucket in the data structure.

If the first hash bucket is occupied, the parent prefix stored in the first hash bucket has been moved, the second hash bucket is occupied, and the parent prefix stored in the second hash bucket has not been moved, move the parent prefix stored in the second hash bucket to another hash bucket and determine that the parent prefix corresponds to the second hash bucket in the data structure.

In an example, in response to determining, based on the values corresponding to the P feature bits in the parent prefix, a hash bucket corresponding to the parent prefix in the data structure, the processing module 63 is to:

For each parent prefix, determine a hash value based on the values corresponding to the P feature bits in the parent prefix. If a hash bucket corresponding to the hash value in the data structure is idle or stores only one parent prefix, determine that the parent prefix corresponds to the hash bucket in the data structure.

In an example, in response to determining, based on the values corresponding to the P feature bits in the parent prefix, a hash bucket corresponding to the parent prefix in the data structure, the processing module 63 is to:

Divide all parent prefixes into N prefix sets, where N is a positive integer greater than 1. Each prefix set includes a plurality of parent prefixes and corresponds to P feature bits. Different prefix sets correspond to different feature bits. The N prefix sets correspond one-to-one to N layers of hash bucket sets in the data structure, and each layer of hash bucket sets includes a plurality of hash buckets.

For each parent prefix in the ith prefix set, where i ranges from 1 to N, determine a hash bucket corresponding to the parent prefix in the ith layer of hash bucket sets in the data structure based on the values corresponding to the P feature bits corresponding to the ith prefix set in the parent prefix.

Based on the same inventive concept as the aforementioned method, an application of the present disclosure proposes a network device. Referring to FIG. 7, the network device includes: a processor 71 and a machine-readable storage medium 72. The machine-readable storage medium 72 stores machine-executable instructions that may be executed by the processor 71. The processor 71 is to execute the machine-executable instructions to implement the lookup method disclosed in the above examples of the present disclosure.

Based on the same inventive concept as the aforementioned method, an application of the present disclosure also provides a machine-readable storage medium. The machine-readable storage medium stores computer instructions that, in response to determining executed by a processor, implement the lookup method disclosed in the above examples of the present disclosure. The machine-readable storage medium may be any electronic, magnetic, optical, or other physical storage device that may contain or store information, such as executable instructions and data. For example, the machine-readable storage medium may be RAM (Random Access Memory), volatile memory, non-volatile memory, flash memory, a storage drive (such as a hard disk drive), a solid-state drive, any type of storage disk (such as an optical disk or DVD), or a similar storage medium, or a combination thereof.

Based on the same inventive concept as the aforementioned method, an application of the present disclosure also provides a computer program product. The computer program product may include a computer program. In response to determining the computer program is executed by a processor, the lookup method disclosed in the above examples of the present disclosure is implemented. Those skilled in the art should understand that the applications of the present disclosure may be provided as methods, systems, or computer program products. Therefore, the present disclosure may adopt the form of a complete hardware application, a complete software application, or an application combining software and hardware aspects. Moreover, the present disclosure may adopt the form of a computer program product implemented on one or more computer-usable storage media (including, but not limited to, disk storage devices, CD-ROMs, optical storage devices, etc.) that contain computer-usable program code.

The above descriptions are merely applications of the present disclosure and are not intended to limit the present disclosure. For those skilled in the art, the present disclosure may be subject to various modifications and changes. Any modifications, equivalent substitutions, improvements, etc., made within the spirit and principles of the present disclosure should be included in the scope of the claims of the present disclosure.

## Claims

1. A lookup method, comprising:
constructing a Bitcuts Hash Trie (BHT) based on a configured split bit M, wherein the BHT comprises a plurality of nodes, each node corresponds to an exact-match bit count and a data structure, and the exact-match bit count of each node is an integer a plurality of M; wherein, for each node except nodes at a last level, the node corresponds to a first child node and a second child node, the exact-match bit count of the first child node is greater than the exact-match bit count of the node, and the exact-match bit count of the second child node is less than the exact-match bit count of the node;
determining one or more parent prefixes by splitting a to-be-stored IPv6 prefix based on the BHT and a prefix length of the to-be-stored IPv6 prefix, wherein the prefix length of each parent prefix is an integer a plurality of M;
for each parent prefix, looking up a target node corresponding to the parent prefix from the BHT, wherein the exact-match bit count of the target node is same as the prefix length of the parent prefix;
adding the parent prefix to the data structure of the target node; wherein, if the parent prefix is not a parent prefix with a longest prefix length of the to-be-stored IPv6 prefix, the parent prefix corresponds to invalid information in the data structure; if the parent prefix is the parent prefix with the longest prefix length of the to-be-stored IPv6 prefix, the parent prefix corresponds to valid information in the data structure, and the valid information is to determine forwarding information corresponding to the to-be-stored IPv6 prefix;
wherein the BHT is to look up forwarding information corresponding to an IPv6 address to be looked up.

2. The method of claim 1, wherein,
for each node except nodes at the last level, a difference between the exact-match bit count of the first child node corresponding to the node and the exact-match bit count of the node is M*2 ^{(S-1)}, and a difference between the exact-match bit count of the node and the exact-match bit count of the second child node corresponding to the node is M*2 ^{(S-1)};
wherein S represents a difference between a level number of nodes at the last level and a level number of the node.

3. The method of claim 1, wherein the determining one or more parent prefixes by splitting the to-be-stored IPv6 prefix based on the BHT and the prefix length of the to-be-stored IPv6 prefix comprises:
determining a node at a first level of the BHT as a current node;
comparing the prefix length of the to-be-stored IPv6 prefix with the exact-match bit count of the current node;
in response to the prefix length of the to-be-stored IPv6 prefix being greater than the exact-match bit count, splitting off a parent prefix from the to-be-stored IPv6 prefix, wherein the prefix length of the parent prefix is the exact-match bit count, and determining the first child node of the current node as an updated current node; in response to the prefix length of the to-be-stored IPv6 prefix being less than the exact-match bit count, determining the second child node of the current node as the updated current node;
determining, based on the updated current node, whether the current node is a node at the last level;
if not, repeatedly performing an operation of comparing the prefix length of the to-be-stored IPv6 prefix with the exact-match bit count of the current node; if yes, in response to the prefix length of the to-be-stored IPv6 prefix being greater than the exact-match bit count of the current node, splitting off a parent prefix from the to-be-stored IPv6 prefix, wherein the prefix length of the parent prefix is the exact-match bit count of the current node.

4. The method of claim 3, wherein in response to the difference between the prefix length of the to-be-stored IPv6 prefix and the exact-match bit count of the current node not being greater than M, the method further comprises:
splitting off a tail prefix from the to-be-stored IPv6 prefix, wherein the prefix length of the tail prefix is the difference between the prefix length of the to-be-stored IPv6 prefix and the exact-match bit count of the current node.

5. The method of claim 4, wherein the method further comprises:
for the parent prefix with the longest prefix length of the to-be-stored IPv6 prefix, storing the tail prefix and the forwarding information of the to-be-stored IPv6 prefix in a prefix trie corresponding to the parent prefix; wherein the valid information corresponding to the parent prefix in the data structure comprises index information, and the index information is to indicate a specified position of the prefix trie to obtain the forwarding information based on the specified position.

6. The method of claim 4 or 5, wherein after the comparing the prefix length of the to-be-stored IPv6 prefix with the exact-match bit count of the current node, the method further comprises:
if the prefix length of the to-be-stored IPv6 prefix is equal to the exact-match bit count, splitting off a parent prefix from the to-be-stored IPv6 prefix and stopping updating the current node, wherein the prefix length of the parent prefix is the exact-match bit count; wherein for the parent prefix with the longest prefix length of the to-be-stored IPv6 prefix, the valid information corresponding to the parent prefix in the data structure comprises the forwarding information of the to-be-stored IPv6 prefix;
or, if the prefix length of the to-be-stored IPv6 prefix is equal to the exact-match bit count, repeatedly performing an operation of determining the second child node of the current node as the updated current node.

7. The method of any one of claims 1-5, wherein
after obtaining an IPv6 address to be looked up, the method further comprises:
determining a node at a first level of the BHT as a current node; performing a mask operation on the IPv6 address to be looked up based on the exact-match bit count of the current node to obtain a candidate prefix of the IPv6 address to be looked up;
in response to the candidate prefix matching a reference parent prefix in the data structure of the current node, determining the first child node of the current node as an updated current node; if the reference parent prefix corresponds to valid information in the data structure, recording the valid information corresponding to the reference parent prefix;
in response to the candidate prefix failing to match all parent prefixes in the data structure of the current node, determining the second child node of the current node as the updated current node;
determining, based on the updated current node, whether the current node is a node at the last level;
if not, repeatedly performing the mask operation on the IPv6 address to be looked up based on the exact-match bit count of the current node to obtain a candidate prefix of the IPv6 address to be looked up;
if yes, performing the mask operation on the IPv6 address to be looked up based on the exact-match bit count of the current node to obtain a candidate prefix; if the candidate prefix matches a reference parent prefix in the data structure of the current node and the reference parent prefix corresponds to valid information, recording the valid information corresponding to the reference parent prefix;
determining the forwarding information of the IPv6 address to be looked up based on the recorded valid information corresponding to the reference parent prefix with the longest prefix length.

8. The method of claim 1, wherein
for each node of the BHT, the data structure corresponding to the node comprises a plurality of hash buckets, and the data structure corresponds to P feature bits, wherein P is a positive integer greater than 1;
for each parent prefix corresponding to the node, determining the hash bucket corresponding to the parent prefix in the data structure based on values corresponding to the P feature bits in the parent prefix, and storing the parent prefix, the invalid information corresponding to the parent prefix or the valid information corresponding to the parent prefix in the hash bucket.

9. The method of claim 8, wherein the determining the hash bucket corresponding to the parent prefix in the data structure based on values corresponding to the P feature bits in the parent prefix comprises:
for each parent prefix, determining a hash bucket corresponding to the parent prefix in the data structure based on the values corresponding to the P feature bits in the parent prefix;
if the hash bucket is idle, determining that the parent prefix corresponds to the hash bucket in the data structure;
if the hash bucket is occupied, determining a hash bucket corresponding to the parent prefix in the data structure by using a transition hash algorithm based on the values corresponding to the P feature bits in the parent prefix.

10. The method of claim 8, wherein the determining the hash bucket corresponding to the parent prefix in the data structure based on values corresponding to the P feature bits in the parent prefix comprises:
for each parent prefix, determining a first hash value and a second hash value based on the values corresponding to the P feature bits in the parent prefix, if a first hash bucket corresponding to the first hash value in the data structure is idle, determining that the parent prefix corresponds to the first hash bucket in the data structure;
if the first hash bucket is occupied, and a parent prefix stored in the first hash bucket has not been moved, moving the parent prefix stored in the first hash bucket to another hash bucket, and determining that the parent prefix corresponds to the first hash bucket in the data structure;
if the first hash bucket is occupied, the parent prefix stored in the first hash bucket has been moved, a second hash bucket corresponding to the second hash value in the data structure is idle, determining that the parent prefix corresponds to the second hash bucket in the data structure;
if the first hash bucket is occupied, the parent prefix stored in the first hash bucket has been moved, the second hash bucket is occupied, and a parent prefix stored in the second hash bucket has not been moved, moving the parent prefix stored in the second hash bucket to another hash bucket, and determining that the parent prefix corresponds to the second hash bucket in the data structure.

11. The method of claim 8, wherein the determining the hash bucket corresponding to the parent prefix in the data structure based on values corresponding to the P feature bits in the parent prefix comprises:
for each parent prefix, determining a hash value based on the values corresponding to the P feature bits in the parent prefix; if a hash bucket corresponding to the hash value in the data structure is idle or stores one parent prefix, determining that the parent prefix corresponds to the hash bucket in the data structure.

12. The method of claim 8, wherein the determining the hash bucket corresponding to the parent prefix in the data structure based on values corresponding to the P feature bits in the parent prefix comprises:
dividing all parent prefixes into N prefix sets, wherein N is a positive integer greater than 1; for each prefix set, the prefix set comprises a plurality of parent prefixes, the prefix set corresponds to P feature bits, and feature bits corresponding to different prefix sets are different; wherein the N prefix sets correspond one-to-one to N layers of hash bucket sets of the data structure, and each layer of hash bucket set comprises a plurality of hash buckets;
for each parent prefix in an i-th prefix set, where i takes values from 1 to N successively, determining a hash bucket corresponding to the parent prefix in an i-th layer of hash bucket set of the data structure based on values corresponding to the P feature bits corresponding to the i-th prefix set in the parent prefix.

13. The method of claim 1, wherein
if M is 8, and the exact-match bit count of a node at a first level of the BHT is 64, the exact-match bit count of the first child node of the node is 96, and the exact-match bit count of the second child node of the node is 32;
for a node with the exact-match bit count of 96 at a second level, the exact-match bit count of the first child node of the node is 112, and the exact-match bit count of the second child node of the node is 80;
for a node with the exact-match bit count of 32 at the second level, the exact-match bit count of the first child node of the node is 48, and the exact-match bit count of the second child node of the node is 16;
for a node with the exact-match bit count of 112 at a third level, the exact-match bit count of the first child node of the node is 120, and the exact-match bit count of the second child node of the node is 104;
for a node with the exact-match bit count of 80 at the third level, the exact-match bit count of the first child node of the node is 88, and the exact-match bit count of the second child node of the node is 72;
for a node with the exact-match bit count of 48 at the third level, the exact-match bit count of the first child node of the node is 56, and the exact-match bit count of the second child node of the node is 40;
for a node with the exact-match bit count of 16 at the third level, the exact-match bit count of the first child node of the node is 24, and the exact-match bit count of the second child node of the node is 8;
or,
if M is 16, and the exact-match bit count of the node at the first level of the BHT is 64, the exact-match bit count of the first child node of the node is 96, and the exact-match bit count of the second child node of the node is 32;
for a node with the exact-match bit count of 96 at the second level, the exact-match bit count of the first child node of the node is 112, and the exact-match bit count of the second child node of the node is 80;
for a node with the exact-match bit count of 32 at the second level, the exact-match bit count of the first child node of the node is 48, and the exact-match bit count of the second child node of the node is 16.

14. A lookup apparatus, comprising:
a construction module, to construct a Bitcuts Hash Trie (BHT) based on a configured split bit M, wherein the BHT comprises a plurality of nodes, each node corresponds to an exact-match bit count and a data structure, and the exact-match bit count of each node is an integer a plurality of M; wherein for each node except nodes at a last level, the node corresponds to a first child node and a second child node, the exact-match bit count of the first child node is greater than the exact-match bit count of the node, and the exact-match bit count of the second child node is less than the exact-match bit count of the node;
a splitting module, to determine one or more parent prefixes by splitting a to-be-stored IPv6 prefix based on a prefix length of the to-be-stored IPv6 prefix and the BHT, wherein the prefix length of each parent prefix is an integer a plurality of M;
a processing module, to, for each parent prefix, lookup a target node corresponding to the parent prefix from the BHT, wherein the exact-match bit count of the target node is same as the prefix length of the parent prefix; add the parent prefix to the data structure of the target node; wherein if the parent prefix is not a parent prefix with a longest prefix length of the to-be-stored IPv6 prefix, the parent prefix corresponds to invalid information in the data structure; if the parent prefix is the parent prefix with the longest prefix length of the to-be-stored IPv6 prefix, the parent prefix corresponds to valid information in the data structure, and the valid information is to determine forwarding information corresponding to the to-be-stored IPv6 prefix;
wherein the BHT is to lookup forwarding information corresponding to an IPv6 address to be looked up.

15. The apparatus of claim 14, wherein
for each node except nodes at the last level, a difference between the exact-match bit count of the first child node corresponding to the node and the exact-match bit count of the node is M*2^{(S - 1)}, and a difference between the exact-match bit count of the node and the exact-match bit count of the second child node corresponding to the node is M*2^{(S - 1)};
wherein S represents a difference between a level number of nodes at the last level and a level number of the node.

16. The apparatus of claim 14, wherein
in response to determining one or more parent prefixes by splitting the to-be-stored IPv6 prefix based on the prefix length of the to-be-stored IPv6 prefix and the BHT, the splitting module is to:
determine a node at a first level of the BHT as a current node;
compare the prefix length of the to-be-stored IPv6 prefix with the exact-match bit count of the current node;
if the prefix length of the to-be-stored IPv6 prefix is greater than the exact-match bit count, split off a parent prefix from the to-be-stored IPv6 prefix, wherein the prefix length of the parent prefix is the exact-match bit count, and determine the first child node of the current node as an updated current node; if the prefix length of the to-be-stored IPv6 prefix is less than the exact-match bit count, determine the second child node of the current node as the updated current node;
determine, based on the updated current node, whether the current node is a node at the last level;
if not, repeatedly perform an operation of comparing the prefix length of the to-be-stored IPv6 prefix with the exact-match bit count of the current node; if yes, in response to the prefix length of the to-be-stored IPv6 prefix being greater than the exact-match bit count of the current node, split off a parent prefix from the to-be-stored IPv6 prefix, wherein the prefix length of the parent prefix is the exact-match bit count of the current node.

17. The apparatus of claim 16, wherein the splitting module is further to, in response to the difference between the prefix length of the to-be-stored IPv6 prefix and the exact-match bit count of the current node not being greater than M, split off a tail prefix from the to-be-stored IPv6 prefix, wherein the prefix length of the tail prefix is the difference between the prefix length of the to-be-stored IPv6 prefix and the exact-match bit count of the current node.

18. The apparatus of claim 17, wherein the splitting module is further to, for the parent prefix with the longest prefix length of the to-be-stored IPv6 prefix, store the tail prefix and the forwarding information of the to-be-stored IPv6 prefix in a prefix trie corresponding to the parent prefix; wherein the valid information corresponding to the parent prefix in the data structure comprises index information, and the index information is to indicate a specified position of the prefix trie to obtain the forwarding information based on the specified position.

19. The apparatus of claim 17 or 18, wherein the splitting module is further to:
if the prefix length of the to-be-stored IPv6 prefix is equal to the exact-match bit count, split off a parent prefix from the to-be-stored IPv6 prefix and stop updating the current node, wherein the prefix length of the parent prefix is the exact-match bit count; wherein for the parent prefix with the longest prefix length of the to-be-stored IPv6 prefix, the valid information corresponding to the parent prefix in the data structure comprises the forwarding information of the to-be-stored IPv6 prefix;
or, if the prefix length of the to-be-stored IPv6 prefix is equal to the exact-match bit count, repeatedly perform an operation of determining the second child node of the current node as the updated current node.

20. The apparatus of any one of claims 14-18, wherein the apparatus further comprises:
a lookup module, to, after obtaining an IPv6 address to be looked up, determine a node at a first level of the BHT as a current node; perform a mask operation on the IPv6 address to be looked up based on the exact-match bit count of the current node to obtain a candidate prefix of the IPv6 address to be looked up;
in response to the candidate prefix matching a reference parent prefix in the data structure of the current node, determine the first child node of the current node as an updated current node; if the reference parent prefix corresponds to valid information in the data structure, record the valid information corresponding to the reference parent prefix;
in response to the candidate prefix failing to match all parent prefixes in the data structure of the current node, determine the second child node of the current node as the updated current node;
determine, based on the updated current node, whether the current node is a node at the last level;
if not, repeatedly perform the mask operation on the IPv6 address to be looked up based on the exact-match bit count of the current node to obtain a candidate prefix of the IPv6 address to be looked up;
if yes, perform the mask operation on the IPv6 address to be looked up based on the exact-match bit count of the current node to obtain a candidate prefix; if the candidate prefix matches a reference parent prefix in the data structure of the current node and the reference parent prefix corresponds to valid information, recording the valid information corresponding to the reference parent prefix;
determine the forwarding information of the IPv6 address to be looked up based on the recorded valid information corresponding to the reference parent prefix with the longest prefix length.

21. The apparatus of claim 14, wherein
for each node of the BHT, the data structure corresponding to the node comprises a plurality of hash buckets, and the data structure corresponds to P feature bits, wherein P is a positive integer greater than 1;
the processing module is further to, for each parent prefix corresponding to the node, determine the hash bucket corresponding to the parent prefix in the data structure based on values corresponding to the P feature bits in the parent prefix, and store the parent prefix, the invalid information corresponding to the parent prefix or the valid information corresponding to the parent prefix in the hash bucket.

22. The apparatus of claim 21, wherein
in response to determining, based on values corresponding to the P feature bits in the parent prefix, the hash bucket corresponding to the parent prefix in the data structure, the processing module is to:
for each parent prefix, determine a hash bucket corresponding to the parent prefix in the data structure based on the values corresponding to the P feature bits in the parent prefix;
if the hash bucket is idle, determine that the parent prefix corresponds to the hash bucket in the data structure;
if the hash bucket is occupied, determine a hash bucket corresponding to the parent prefix in the data structure by using a transition hash algorithm based on the values corresponding to the P feature bits in the parent prefix.

23. The apparatus of claim 21, wherein
in response to determining, based on values corresponding to the P feature bits in the parent prefix, the hash bucket corresponding to the parent prefix in the data structure, the processing module is to:
for each parent prefix, determine a first hash value and a second hash value based on the values corresponding to the P feature bits in the parent prefix, if a first hash bucket corresponding to the first hash value in the data structure is idle, determine that the parent prefix corresponds to the first hash bucket in the data structure;
if the first hash bucket is occupied, and a parent prefix stored in the first hash bucket has not been moved, move the parent prefix stored in the first hash bucket to another hash bucket, and determine that the parent prefix corresponds to the first hash bucket in the data structure;
if the first hash bucket is occupied, the parent prefix stored in the first hash bucket has been moved, a second hash bucket corresponding to the second hash value in the data structure is idle, determine that the parent prefix corresponds to the second hash bucket in the data structure;
if the first hash bucket is occupied, the parent prefix stored in the first hash bucket has been moved, the second hash bucket is occupied, and a parent prefix stored in the second hash bucket has not been moved, move the parent prefix stored in the second hash bucket to another hash bucket, and determine that the parent prefix corresponds to the second hash bucket in the data structure.

24. The apparatus of claim 21, wherein
in response to determining, based on values corresponding to the P feature bits in the parent prefix, the hash bucket corresponding to the parent prefix in the data structure, the processing module is to:
for each parent prefix, determine a hash value based on the values corresponding to the P feature bits in the parent prefix; if a hash bucket corresponding to the hash value in the data structure is idle or stores one parent prefix, determine that the parent prefix corresponds to the hash bucket in the data structure.

25. The apparatus of claim 21, wherein
in response to determining, based on values corresponding to the P feature bits in the parent prefix, the hash bucket corresponding to the parent prefix in the data structure, the processing module is to:
divide all parent prefixes into N prefix sets, wherein N is a positive integer greater than 1; for each prefix set, the prefix set comprises a plurality of parent prefixes, the prefix set corresponds to P feature bits, and feature bits corresponding to different prefix sets are different; wherein the N prefix sets correspond one-to-one to N layers of hash bucket sets of the data structure, and each layer of hash bucket set comprises a plurality of hash buckets;
for each parent prefix in an i-th prefix set, where i takes values from 1 to N successively, determine a hash bucket corresponding to the parent prefix in an i-th layer of hash bucket set of the data structure based on values corresponding to the P feature bits corresponding to the i-th prefix set in the parent prefix.

26. The apparatus of claim 14, wherein
if M is 8, and the exact-match bit count of a node at a first level of the BHT is 64, the exact-match bit count of the first child node of the node is 96, and the exact-match bit count of the second child node of the node is 32;
for a node with the exact-match bit count of 96 at a second level, the exact-match bit count of the first child node of the node is 112, and the exact-match bit count of the second child node of the node is 80;
for a node with the exact-match bit count of 32 at the second level, the exact-match bit count of the first child node of the node is 48, and the exact-match bit count of the second child node of the node is 16;
for a node with the exact-match bit count of 112 at a third level, the exact-match bit count of the first child node of the node is 120, and the exact-match bit count of the second child node of the node is 104;
for a node with the exact-match bit count of 80 at the third level, the exact-match bit count of the first child node of the node is 88, and the exact-match bit count of the second child node of the node is 72;
for a node with the exact-match bit count of 48 at the third level, the exact-match bit count of the first child node of the node is 56, and the exact-match bit count of the second child node of the node is 40;
for a node with the exact-match bit count of 16 at the third level, the exact-match bit count of the first child node of the node is 24, and the exact-match bit count of the second child node of the node is 8;
or,
if M is 16, and the exact-match bit count of the node at the first level of the BHT is 64, the exact-match bit count of the first child node of the node is 96, and the exact-match bit count of the second child node of the node is 32;
for a node with the exact-match bit count of 96 at the second level, the exact-match bit count of the first child node of the node is 112, and the exact-match bit count of the second child node of the node is 80;
for a node with the exact-match bit count of 32 at the second level, the exact-match bit count of the first child node of the node is 48, and the exact-match bit count of the second child node of the node is 16.

27. A network device, comprising: a processor and a machine-readable storage medium, wherein the machine-readable storage medium stores machine-executable instructions executable by the processor; the processor is to execute the machine-executable instructions to implement the method according to any one of claims 1-14.
